# EUROPEAN PATENT APPLICATION

(11) **EP 4 520 292 A1**
(43) Date of publication of application: **12.03.2025**
(21) Application number: 23195689.7
(22) Date of filing: 06.09.2023
(51) Int. Cl.: A61C 17/20, A61C 17/22, A61C 17/32

(54) **DEVICE FOR CLEANING TEETH**

(71) Applicant: epitome GmbH, 1100 Wien (AT)
(72) Inventor: Wallner, Dominik, 1100 Wien (AT); Shmelev, Andrei, 1050 Wien (AT); Pichler, Bernhard, Moritz, 1030 Wien (AT); Weiss-Bouslama, Bernhard, 3423 St. Andrä-Wördern (AT)
(74) Representative: WSL Patentanwälte Partnerschaft mbB

(57) **Abstract**

A device (1) for cleaning at least in sections teeth and/or interdental areas and/or gingival areas of a user, comprising a cleaning chamber element (3) configured to confining at least one processing volume (2) together with the gum (4) of the user and/or with at least one tooth surface region (8) belonging to a tooth (9) and being adjacent to the gumline (5) and/or with at least one chewing surface (19) of the at least one tooth and/or with at least one tooth transition area (21) adjacent to the at least one chewing surface, wherein the cleaning chamber element is designed such that tooth surface regions of several upper and/or lower teeth can be attended by iteratively moving the cleaning chamber element to adjacent positions, further comprising at least one transducer (14) for generating ultrasound, wherein the transducer is configured to apply the ultrasound to a dentifrice fluid (10) in the processing volume.

## Description

The present invention relates to a device and a method for cleaning at least in sections teeth and/or interdental areas and/or gingival areas of a user.

It is known that ultrasound can be used for cleaning a user's teeth, cf. US 2011/0159461 A1 relating to a power toothbrush having a toothbrush head comprising not only bristles, but also a waveguide operatively connected to an ultrasonic transducer. Bubbles that are generated in a dental fluid by a sonic motion of the bristles are acted upon by the ultrasound in that the bubbles are resonated. The corresponding bubble oscillations foster plaque removal. Even though good cleaning results can be achieved theoretically, in practice it is difficult to achieve good cleaning results in a reproducible way, since, for example, a slightly different amount of toothpaste and/or saliva can influence the cleaning result dramatically. Moreover, manual movements by the user are still needed, i.e. the cleaning result also depends very much on the specific skills of the user.

In ultrasound cleaning of inanimate objects in a fluid the effect of cavitation is used. The latter refers to the formation of small vapour-filled cavities, in places of the fluid where the pressure is relatively low due to the ultrasound wave with a sufficiently high intensity acting upon the fluid as pressure wave. When subjected to higher pressure (by the inverted pressure wave), these cavities collapse and locally generate very high temperatures (of up to several thousand Kelvin) and pressures (of up to about a thousand bar), which can break up the adhesion between dirt particles and a surface to be cleaned. However, the surface to be cleaned can suffer damage due to the high temperatures and pressures, which is in fact unacceptable and unsafe when it comes to the cleaning of teeth of a user. Though one may occasionally find opposite allegations, cf. e.g. US 2016/0113745 A1 which suggests cavitation for cleaning teeth.

Another disadvantage of applying cavitation, more precisely inertial (or transient) cavitation, for tooth cleaning is that high ultrasound intensities are needed and these high intensities lead to heating of bones and soft tissue of the user, which potentially leads to damage.

On the other hand, ultrasound intensities that are low enough to prevent damage often do not provide for a sufficient tooth

It is thus the objective of the present invention to provide for a device and safe method for cleaning at least in sections teeth and/or interdental areas and/or gingival areas of a user that overcome the above-mentioned disadvantages. Particularly,
the invention shall provide for a user-independent, reproducible optimum cleaning performance while simultaneously avoiding any damage to the user's soft (gum) tissue.

In order to solve the above-mentioned problems, according to the invention a device for cleaning at least in sections teeth and/or interdental areas and/or gingival areas of a user is provided, the device comprising at least one cleaning chamber element configured to confining at least one processing volume together with the gum of the user and/or with at least one tooth surface region, each tooth surface region belonging to a tooth of the user and being adjacent to the gumline, and/or with at least one chewing surface belonging to the at least one tooth and/or with at least one tooth transition area adjacent to the at least one chewing surface, wherein the cleaning chamber element is designed such that tooth surface regions and/or chewing surfaces and/or tooth transition areas and/or interdental areas and/or gingival areas of several, preferably all, upper and/or lower teeth of the user can be attended by iteratively moving the cleaning chamber element to adjacent positions, the device further comprising at least one transducer for generating ultrasound, wherein the at least one transducer is configured to apply the ultrasound to a dentifrice fluid in the at least one processing volume such that ultrasound waves are directed toward the at least one tooth surface region and/or the at least one chewing surface and/or the at least one tooth transition area and/or at least one interdental area and/or at least one gingival area for producing a cleansing action of microbubbles in the dentifrice fluid on the at least one tooth surface region and/or the at least one chewing surface and/or the at least one tooth transition area and/or the at least one interdental area and/or the at least one gingival area, wherein the at least one cleaning chamber element is designed for contacting the gum of the user and/or the at least one tooth surface region and/or the at least one chewing surface and/or the at least one tooth transition area with at least one contact section, wherein the contact section is configured to substantially seal the at least one processing volume at least in the region of the gum and/or the at least one tooth surface region and/or the at least one chewing surface and/or the at least one tooth transition area such that the following is facilitated:
- filling of the processing volume with the dentifrice fluid and/or
- maintaining the processing volume with the dentifrice fluid with the microbubbles having a certain size and/or a certain size distribution and/or a concentration in a certain range.

In principal, there can be more than one cleaning chamber element. It is also conceivable that several smaller cleaning chamber elements form together a bigger cleaning chamber element.

Typically, a tooth surface region is comprised by a buccal or lingual surface of a tooth, i.e. one tooth typically has two tooth surface regions that are arranged on opposing sides of the tooth.

Typically, a transition area connects a tooth surface region with the chewing surface of a tooth and is correspondingly arranged between the tooth surface region and the chewing surface.

The at least one gingival area is adjacent to the gumline and/or a tooth surface region and/or an interdental area.

"Designed" is to be understood not only with respect to a geometrical shape, but also to the actual dimensions. Accordingly, the cleaning chamber element is not designed as mouthguard piece / mouthpiece for covering the whole upper and/or lower set of teeth of the user, thereby filling the user's oral cavity. Instead, the cleaning chamber element is designed as a comparatively small element which needs to be iteratively moved to adjacent positions (within the user's oral cavity), in order to attend all upper and/or lower teeth of the user. This means that with the device according to the present invention cleaning of all teeth and the entire dental surface, respectively, is done iteratively and not simultaneously.

The iterative movement of the cleaning chamber element can be continuous or intermittent.

In principle, the iterative movement can be realized manually or, preferably electrically, driven, particularly automatically controlled and driven. Therein the cleaning chamber element substantially determines the processing volume, i.e. the design of the cleaning chamber element substantially determines the design of the processing volume. Accordingly, during the intended use of the device according to the present invention the processing volume is not partially confined by all, but only by one or a few teeth of the user, more precisely by one or a few tooth surface regions and/or tooth transition areas and/or chewing surfaces.

Moreover, the processing volume can be partially confined by at least one further tooth area of at least one tooth, which further tooth area is typically disposed in the region of an interdental area and typically faces a further tooth area of an adjacent tooth. More precisely, each tooth has along its circumference two (opposing) tooth surface regions and two (opposing) further tooth areas, wherein along the tooth circumference each tooth surface region is followed by a further tooth surface area and vice versa. Also, the processing volume can be partially confined by the gum, more precisely by a part of the gum. Cleaning, i.e. removing plaque and/or biofilm from the teeth, particularly from the at least one tooth surface region and/or the at least one chewing surface and/or the at least one tooth transition area and/or the at least one interdental area and/or at least one gingival area, is achieved not only by the ultrasound waves as such, but by applying the ultrasound to a dentifrice fluid containing microbubbles. The microbubbles can be deliberately contained in the dentifrice fluid, i.e. already before the dentifrice fluid enters the at least one processing volume, and/or can be created when the dentifrice fluid is in the at least one processing volume.

The latter can be accomplished, for example, using an oversaturated liquid as dentifrice fluid, wherein the microbubbles are created by the reduced pressure in the ultrasonic field, i.e. while the ultrasound is applied to the dentifrice fluid in the processing volume. One example for such a dentifrice fluid is a liquid, particularly a waterbased liquid, oversaturated with COz, wherein CO₂ microbubbles can be created. Ultimately, the ultrasound waves can act upon said microbubbles, wherein several different effects can be produced: the microbubbles can be split, combined, resonated/oscillated or moved in the fluid.

Furthermore, clusters of microbubbles, so-called contact lines, can be formed that foster the cleaning. Also so-called acoustic Lichtenberg figures can be formed by the microbubbles that contribute to the cleaning too. Said acoustic Lichtenberg figures are formed by very small microbubbles that move around between nodes (points of zero amplitude of the ultrasound wave) and antinodes (points of maximum amplitude of the ultrasound wave). Large microbubbles, on the other hand, are held around nodes, whereas small microbubbles are held around antinodes.

Additionally, microbubbles may adhere or be at least situated close to the surface to be cleaned and may collapse in reaction to the ultrasound wave field. During collapsing relatively high pressure peaks and thus relatively high pressure gradients are generated locally and safely.

As a consequence of all above-mentioned effects shear forces are applied to biofilm and/or plaque on the surfaces to be cleaned, particularly on the at least one tooth surface region and/or the at least one chewing surface and/or the at least one tooth transition area and/or the at least one interdental area and/or the at least one gingival area, which shear forces detach the biofilm and/or plaque.

Apart from this cleansing action, the microbubbles can also transport the detached particles away from the surfaces to be cleaned.

Furthermore, an acoustic flow is produced due to non-linear development of positive and negative amplitudes on the one hand, and due to attenuation of the ultrasound intensity with increasing distance from the transducer on the other hand. The expression "intensity" is used in term of Spatial Peak Intensity (I_{SP}) which is the highest intensity and is found at the center of the beam.

Said acoustic flow provides for a movement (kind of current) within the dentifrice fluid away from the transducer and hence to the surfaces to be cleaned. Accordingly, also the microbubbles are moved from the at least one transducer toward the surfaces to be cleaned, where the microbubbles effectuate the above-mentioned cleansing action. As mentioned above, said surfaces to be cleaned include interdental areas (with further tooth areas) as well as gingival areas. This means that with the device according to the present invention, areas can be cleaned, particularly from plaque and/or biofilm, that are inaccessible with conventional toothbrushes (but are accessible by means of the ultrasound and the ultrasound in combination with the microbubbles in the dentifrice fluid, respectively). This means that in principle no additional cleaning devices are needed for cleaning these areas. Note that the application of the ultrasound waves as described above is responsible for producing a cleansing action, which is essentially free of inertial (or transient) cavitation, since the used intensities are much lower than intensities enabling inertial cavitation. The resulting cleansing action is primarily based on the above described effects causing microbubble-induced shear stresses, which effects can occur in the course of so-called non-inertial cavitation, which can take place due to the used intensities.

On the one hand, this advantageously allows for rather low ultrasound intensities that are unproblematic from a safety point of view (avoiding any damage to the user's bones and soft tissue), but are sufficiently high for acting upon the microbubbles as described above and hence for achieving optimum cleaning results.

In that a relatively small processing volume is realized due to the above-described design of the cleaning chamber element, all parameters relevant for a good cleaning result - e.g. frequency of the generated ultrasound and/or intensity of the generated ultrasound and/or amount of dentifrice fluid and/or microbubble sizes and/or microbubble distribution and/or microbubble concentration etc. - can be precisely controlled and maintained in the processing volume during the cleaning process. Accordingly, clinically effective cleaning results can be achieved reproducibly and independent from the actual position to which the cleaning chamber element has been moved.

It is noted that, except for the microbubbles, the dentifrice fluid can principally be a known oral care liquid, like an antiseptic mouthwash. More generally, except for the microbubbles, the dentifrice fluid can be a dentifrice or mouthwash or any other liquid or semi-liquid or gel-like or semi-solid carrier material, including water and saliva substitutes, suitable for delivery to the user's oral cavity.

Since the ultrasound transducer is configured to apply the ultrasound to a dentifrice fluid in the at least one processing volume, the processing volume is filled with said fluid during the intended use of the device according to the present invention. As mentioned above, the dentifrice fluid can contain microbubbles already before entering the processing volume and/or microbubbles can be created while the dentifrice fluid is in the processing volume. Filling is facilitated by sealing the processing volume, at least to some extent (i.e. sealing does not need to be perfect as described below in more detail).

Note that filling does not necessarily mean that the processing volume has to be filled completely full. Particularly, if not all of the at least one tooth surface region, the at least one chewing surface, the at least one tooth transition area, the at least one interdental area and the at least one gingival area have to be cleaned simultaneously, excellent cleaning results can be achieved with the processing volume filled only to some extent.

Moreover, the sealing helps maintaining the dentifrice fluid including the microbubbles in the processing volume and, accordingly, cleaning can be carried out such that process parameters, particularly microbubble-related process parameters (e.g. size, distribution, concentration), can be kept within a certain range necessary for achieving an optimum cleansing action. Perfect sealing is hindered in practice, for example due to different tooth geometries and/or interdental areas that cause leakage.

However, it turns out that an imperfect sealing is not necessarily a disadvantage: an imperfect sealing requires iterative, i.e. continuous or intermittent, filling or "refilling" of the processing volume, in order to account for fluid leaked out. Said refilling is not only easily established, but can also provide for "fresh" microbubbles in the processing volume if the dentifrice fluid contains the microbubbles already before entering the processing volume.

Even though maintaining the dentifrice fluid in the processing volume guarantees that the process parameters can be kept within a certain (relatively narrow) range, there will be slight changes of the parameters due to the above-described cleansing action caused by the ultrasound acting on the microbubbles, e.g. when microbubbles coalesce or collapse. In the mentioned example of using a dentifrice fluid containing the microbubbles already before entering the processing volume, the ideal parameters can then be re-established by the refilling of the processing volume with dentifrice fluid containing fresh microbubbles.

For the sake of completeness it is stated that the faster refilling is, the worse the sealing may be.

For the sake of completeness it is further mentioned that due to the "refilling" dentifrice fluid accumulates in the user's oral cavity in the course of the intended use of the device according to the present invention. Accordingly, the user spits out the used/accumulated dentifrice fluid at least once after the overall cleaning process, preferably of all teeth, is finished, wherein it is conceivable that used/accumulated dentifrice fluid is spit out at least once already in the course of the overall cleaning process too (i.e. also before the overall cleaning process is finished).

The sealing effect of the contact section can be established in a known manner. For example, the contact section can comprise one or more sealing lips and/or can be made of a material with advantageous sealing properties, e.g. of rubber or of a suitable plastic material or of silicone.

By analogy to the above, in a method for cleaning at least in sections teeth and/or interdental areas and/or gingival areas of a user, according to the invention it is provided that the method is comprising the following steps:
- positioning at least one cleaning chamber element such that at least one processing volume is confined by the cleaning chamber element together with the gum of the user and/or with at least one tooth surface region, each tooth surface region belonging to a tooth of the user and being adjacent to the gumline, and/or with at least one chewing surface belonging to the at least one tooth and/or with at least one tooth transition area adjacent to the at least one chewing surface; - generating ultrasound by means of at least one transducer and applying the ultrasound to a dentifrice fluid in the at least one processing volume such that ultrasound waves are directed toward the at least one tooth surface region and/or the at least one chewing surface and/or the at least one tooth transition area and/or at least one interdental area and/or at least one gingival area for producing a cleansing action of microbubbles in the dentifrice fluid on the at least one tooth surface region and/or the at least one chewing surface and/or the at least one tooth transition area and/or the at least one interdental area and/or the at least one gingival area;
- iteratively moving the cleaning chamber element to adjacent positions, in order to attend tooth surface regions and/or chewing surfaces and/or tooth transition areas and/or interdental areas and/or gingival areas of several, preferably all, upper and/or lower teeth of the user, wherein the gum of the user and/or the at least one tooth surface region and/or the at least one chewing surface and/or the at least one tooth transition area is/are contacted with at least one contact section of the at least one cleaning chamber element, wherein the contact section substantially seals the at least one processing volume at least in the region of the gum and/or the at least one tooth surface region and/or the at least one chewing surface and/or the at least one tooth transition area such that the following is facilitated:
- filling of the processing volume with the dentifrice fluid
   and/or
- maintaining the processing volume with the dentifrice fluid with the microbubbles having a certain size and/or a certain size distribution and/or a concentration in a certain range.

As mentioned above, filling of the processing volume with the dentifrice fluid, preferably containing the microbubbles, is easily realized, e.g. by pumping. Correspondingly, in a preferred embodiment of the device according to the present invention, it is provided that the device further comprises at least one pump element for pumping and/or drawing the dentifrice fluid into the at least one processing volume. Suitable pump elements are known principally and can be configured as pressure pump, suction pump or double-acting pump, for example. Typically, these pump elements can be very small, allowing for small dimensions of the device that makes handling of the device easy for the user.

By analogy to the above, in a preferred embodiment of the method according to the present invention, it is provided that the at least one processing volume is filled with the dentifrice fluid, wherein the dentifrice fluid is pumped and/or drawn into the processing volume. As mentioned above, the dentifrice fluid is preferably pumped and/or drawn by means of a pump element. In a particularly preferred embodiment of the device according to the present invention, it is provided that the at least one pump element is designed for pumping and/or drawing continuously or intermittently. Correspondingly, in a particularly preferred embodiment of the method according to the present invention, it is provided that the dentifrice fluid is pumped and/or drawn into the at least one processing volume continuously or intermittently.

Hence, the pumping/drawing can be easily matched to the iterative movement of the cleaning chamber element.

Correspondingly, in a preferred embodiment of the method according to the present invention, it is provided that the at least one cleaning chamber element is moved continuously or intermittently.

In a preferred embodiment of the device according to the present invention, it is provided that the device further comprises a microbubble unit for generating the microbubbles in the dentifrice fluid with a certain initial size and/or a certain initial size distribution and/or an initial concentration in a certain range before the dentifrice fluid enters the at least one processing volume, in order to provide for a certain size and/or a certain size distribution and/or a concentration in a certain range of the microbubbles in the dentifrice fluid in the processing volume. The initial size / the initial size distribution / the initial concentration can be the same or different from the size / the size distribution / the concentration in the processing volume, but in any case can guarantee that the required (or optimal) size / size distribution / concentration is established in the processing volume.

Typical reasons for differences between the initial size / the initial size distribution / the initial concentration and the size / the size distribution / the concentration in the processing volume can be: the actual design of the device which influences how far away from the processing volume the microbubbles are produced or how much time the dentifrice fluid spends in the processing volume (and hence how much the microbubbles get dissipated); changes of the microbubble concentration due to the user's saliva mixed with the initial dentifrice fluid in the course of the cleaning process (i.e. the dentifrice fluid during the cleaning process and the "initial" dentifrice fluid can - and often will - have different compositions, not only with respect to the microbubbles).

Typically, the initial size and/or the initial size distribution and/or the initial concentration of the microbubbles in the dentifrice fluid can be measured in the region of the microbubble unit.

It is conceivable that, additionally or alternatively, the size and/or the size distribution and/or the concentration of the microbubbles in the dentifrice fluid can be measured in the processing volume, preferably in the region of at least one outlet opening of the at least one cleaning chamber element.

By analogy to the above, in a preferred embodiment of the method according to the present invention, it is provided that the microbubbles are generated in the dentifrice fluid with a certain initial size and/or a certain initial size distribution and/or an initial concentration in a certain range before the dentifrice fluid enters the at least one processing volume, in order to provide for a certain size and/or a certain size distribution and/or a concentration in a certain range of the microbubbles in the dentifrice fluid in the processing volume. Preferably, the microbubbles are generated in the dentifrice fluid by means of the microbubble unit.

Principally, ways for producing microbubbles are known, e.g. using a Venturi nozzle introducing gas into a fluid, wherein the so-created bubbles can be further refined in their size, cf. US 7913984 B2.

Note that the provision of the microbubble unit does not exclude that microbubbles are additionally created in the dentifrice fluid in the processing volume, e.g. due to the action of the ultrasound.

In order to achieve particularly good cleaning results, in a particularly preferred embodiment of the device according to the present invention, it is provided that the microbubble unit is configured for generating the microbubbles in the dentifrice fluid with the initial concentration and/or the concentration in the range of 0.01 vol.% to 15 vol.%, preferably in the range of 0.5 vol.% to 10 vol.%, more preferably in the range of 0.2 vol.% to 5 vol.%.

By analogy to the above, in a preferred embodiment of the method according to the present invention, it is provided that the microbubbles in the dentifrice fluid are generated with an initial concentration and/or a concentration in the range of 0.01 vol.% to 15 vol.%, preferably in the range of 0.5 vol.% to 10 vol.%, more preferably in the range of 0.2 vol.% to 5 vol.%.

In a preferred embodiment of the device according to the present invention, it is provided that at least one outlet opening for the dentifrice fluid is disposed in the at least one cleaning chamber element. This allows for easy filling of the processing volume with the dentifrice fluid, which preferably already contains the microbubbles. For good order's sake it is mentioned that more than one outlet opening can be provided in the cleaning chamber element, e.g. two or three or more outlet openings.

For example, through the at least one outlet opening dentifrice fluid can be pumped into the processing volume.

As another example, it is also conceivable that there is a fluidic connection between the at least one outlet opening and a dentifrice fluid tank, but the dentifrice fluid is not pumped into the processing volume by means of a (pressure) pump. Instead an auxiliary opening is disposed in the at least one cleaning chamber element and is connected with a suction pump for drawing the dentifrice fluid from the tank through the at least one outlet opening into the processing volume.

In a particularly preferred embodiment of the device according to the present invention, it is provided that the at least one outlet opening is designed such that the dentifrice fluid leaves the at least one outlet opening with a direction having at least a component toward the at least one transducer. This means that during the intended use of the device the dentifrice fluid is typically pumped or drawn into the at least one processing volume, wherein the dentifrice fluid enters the processing volume through the at least one outlet opening at least slightly toward the at least one transducer. This guarantees that the ultrasound generated by the at least one transducer can affect the microbubbles in the dentifrice fluid optimally. In order to achieve the described direction component of the dentifrice fluid, the actual design of the at least one outlet opening particularly comprises a corresponding geometry and/or arrangement.

The at least one transducer can be arranged in the region of the at least one cleaning chamber element, in order to optimize the application of ultrasound into the processing volume (particularly without the necessity of a waveguide for conducting/directing the ultrasound from the transducer to the dentifrice fluid). Hence, also the at least one transducer - not only the cleaning chamber element - can be introduced into the user's oral cavity during the intended use of the device according to the present invention. In order to provide for a certain protection of the at least one transducer, particularly against mechanical damage, in a preferred embodiment of the device according to the present invention, it is provided that the at least one cleaning chamber element covers the at least one transducer at least in sections. Those sections can also be referred to as at least one transducer pad.

In a particularly preferred embodiment of the device according to the present invention, it is provided that the at least one cleaning chamber element covers the at least one transducer liquid-impermeably against the at least one processing volume. This means the dentifrice fluid cannot get through the cleaning chamber element (toward the at least one transducer). On the one hand this allows for an even enhanced protection of the at least one transducer, e.g. against electrical damage. On the other hand, coupling of the ultrasound waves into the dentifrice fluid has to be done through the cleaning chamber element, the material of which has to be chosen accordingly.

In order to allow for a good coupling of the ultrasound waves into the dentifrice fluid, in a preferred embodiment of the device according to the present invention, it is provided that at least one opening is provided in the at least one cleaning chamber element, wherein the at least one transducer is arranged such that the ultrasound waves are directed through the at least one opening. This means the dentifrice fluid can get through the cleaning chamber element toward the at least one transducer for an optimum coupling.

In a preferred embodiment of the device according to the present invention, it is provided that the cleaning chamber element is formed by a cushion element, preferably comprising silicone. This guarantees that the user's comfort is not compromised when the at least one cleaning chamber element is introduced into the user's oral cavity. Furthermore, a good mechanical protection of the at least one transducer can be realized by a corresponding region of the cleaning chamber element, which is also referred to as transducer pad (as already mentioned above). Finally, a sufficient coupling of the ultrasound through the cleaning chamber element into the dentifrice fluid in the processing volume is enabled.

In a preferred embodiment of the device according to the present invention, it is provided that at least one further transducer is provided for generating ultrasound, wherein the at least one further transducer is configured to apply the ultrasound to the dentifrice fluid in the at least one processing volume such that ultrasound waves are directed toward the at least one chewing surface for producing a cleansing action of the microbubbles on the at least one chewing surface. This allows for a simultaneous cleaning of the chewing surface and at least one of the following: the at least one tooth surface region, the at least one tooth transition area, the at least one interdental area and the at least one gingival area.

By analogy to the above, the at least one cleaning chamber element can cover the at least one further transducer at least in sections, preferably in a liquid-impermeable way, against the at least one processing volume. This allows for a protection of the at least one further transducer by means of the cleaning chamber element.

By analogy to the above, at least one further opening can be provided in the at least one cleaning chamber element, wherein the at least one further transducer is arranged such that the ultrasound waves are directed through the at least one further opening.

By analogy to the above, in a preferred embodiment of the method according to the present invention, it is provided that ultrasound is generated by means of at least one further transducer and is applied to the dentifrice fluid in the at least one processing volume such that ultrasound waves are directed toward the at least one chewing surface for producing a cleansing action of the microbubbles on the at least one chewing surface.

In a preferred embodiment of the device according to the present invention, it is provided that abrasive cleaning elements are provided for abrasively cleaning the at least one chewing surface, and preferably for further abrasively cleaning the at least one tooth transition area. This allows for a cheap and space-saving realization of a simultaneous cleaning of the chewing surface, and preferably the tooth transition area, by means of the abrasive elements on the one hand, and of ultrasound-based cleaning of at least one of the following: the at least one tooth surface region, the at least one tooth transition area, the at least one interdental area and the at least one gingival area. The abrasive cleaning elements can be formed by bristles or silicone filaments, for example.

In principle, the abrasive cleaning elements can be provided not only as an alternative to the above-mentioned at least one further transducer, but also additionally.

Generally, the dentifrice fluid can comprise abrasive particles, e.g. based on minerals, to some - rather small (in order not to significantly compromise the ultrasound propagation in the dentifrice fluid) - extent. Particularly, said abrasive particles can foster the cleaning with the abrasive cleaning elements. Moreover, said abrasive particles can serve as nuclei for microbubbles that are created by means of the ultrasound, particularly when an oversaturated liquid is used as dentifrice fluid as detailed above.

By analogy to the above, in a preferred embodiment of the method according to the present invention, it is provided that the at least one chewing surface is cleaned abrasively by means of abrasive cleaning elements.

By analogy to the above, in a particularly preferred embodiment of the method according to the present invention, it is provided that further the at least one tooth transition area is cleaned abrasively by means of the abrasive cleaning elements.

In a particularly preferred embodiment of the device according to the present invention, it is provided that the abrasive cleaning elements are provided on the at least one cleaning chamber element. This allows for an easy and economic manufacturing of the abrasive cleaning elements. Moreover, if the at least one cleaning chamber element is designed as replaceable part, the abrasive cleaning elements can be easily renewed from time to time, simply by replacing the at least one cleaning chamber element.

Accordingly, in a preferred embodiment of the device according to the present invention, it is provided that the at least one cleaning chamber element is configured as replaceable element. It is noted that also in absence of abrasive cleaning elements, the cleaning chamber element can be configured as replaceable element. For example, in order to ensure optimum hygienic conditions, the user can replace the at least one cleaning chamber element from time to time. In order to provide for an efficient cleaning by means of the abrasive cleaning elements, the latter are vibrated with at least one suitable (relatively low) frequency, e.g. with about 300 Hz. Accordingly, in a particularly preferred embodiment of the device according to the present invention, it is provided that at least one vibration generator is provided for generating vibrations in the frequency range of 50 Hz to 700 Hz, preferably in the range of 100 Hz to 500 Hz, more preferably in the range of 250 Hz to 350 Hz, in order to facilitate cleaning with the abrasive cleaning elements.

An appropriate vibration generator can be realised, e.g. by means of at least one piezo element or by means of a drive unit used for moving at least the at least one cleaning chamber element.

By analogy to the above, in a particularly preferred embodiment of the method according to the present invention, it is provided that vibrations are generated in the frequency range of 50 Hz to 700 Hz, preferably in the range of 100 Hz to 500 Hz, more preferably in the range of 250 Hz to 350 Hz, in order to facilitate cleaning with the abrasive cleaning elements.

In order to clean teeth from opposing sides, e.g. to clean tooth surface regions on opposing sides of a certain tooth, it is conceivable to eventually move the at least one cleaning chamber element manually from one side to the opposite side.

This could be realised, e.g. in an embodiment with the at least one cleaning chamber element being mounted on the tip of an arm, which arm can resemble a conventional toothbrush. Moreover, it is conceivable that the at least one cleaning chamber element is manually turned upside-down at some point during the cleaning process, in order to enable cleaning of both the upper and the lower teeth.

In order to speed up the cleaning process by enabling simultaneous cleaning of opposing surfaces, in a preferred embodiment of the device according to the present invention, it is provided that at least two transducers are provided that are arranged opposite each other such that the at least one tooth can be arranged between them, preferably wherein the at least two transducers are provided for at least two processing volumes that are arranged opposite each other.

Accordingly, the at least two processing volumes are arranged at opposing sides.

The at least two processing volumes can be independent from each other, wherein each processing volume can be sealed (at least to some extent as described above). Or there can be a fluid connection between said processing volumes.

Like mentioned above the at least two transducers can be mounted on an arm which can be moved by the user, in order to move the transducers, and preferably the at least one cleaning chamber element, to different positions in the user's oral cavity, e.g. along the upper or lower dentition or from the upper to the lower dentition and vice versa.

For realizing a particular compact arrangement, the at least two transducers can be part of at least one shuttle unit, which shuttle unit can be mounted on the arm to be moved by the user. This means that when the arm is moved by the user, the at least one shuttle unit - and hence the at least two transducers, and preferably the at least one cleaning chamber element, - is/are moved to different positions in the user's oral cavity, e.g. along the upper or lower dentition or from the upper to the lower dentition and vice versa.

In a particularly preferred embodiment of the device according to the present invention, it is provided that the device comprises at least one shuttle unit with the at least two transducers, wherein a drive unit is provided for moving the at least one shuttle unit, in order to iteratively move the at least one cleaning chamber element of the at least one shuttle unit to adjacent positions such that tooth surface regions and/or chewing surfaces and/or tooth transition areas and/or interdental areas and/or gingival areas of several, preferably all, upper and/or lower teeth of the user can be attended. This allows for a particularly comfortable, controlled, reproducible, and preferably automated, cleaning of at least the upper or lower teeth of the user.

The cleaning chamber element is associated with the shuttle unit. Theoretically, there can be several cleaning chamber elements per shuttle unit.

Typically, the drive unit comprises at least one electric motor. Via known transmission means the rotary motion generated by the at least one electric motor can be converted and transferred for properly moving the at least one shuttle unit, in this case.

The actual shuttle unit movement or kinematics generally comprises translational displacements and rotary motions, in order to allow for attending to all upper or lower teeth of the user, said teeth usually being arranged in an arcuate way.

Mechanically, this movement / kinematics can be realized in many different ways.

In order to allow for a particularly simple and flexible mechanical construction, in a particularly preferred embodiment of the device according to the present invention, it is provided that the at least one shuttle unit is mounted on at least one moveable arm, preferably in a rotatable way, wherein the drive unit is provided for moving the at least one arm and the at least one shuttle unit, in order to iteratively move the at least one cleaning chamber element of the at least one shuttle unit to adjacent positions such that tooth surface regions and/or chewing surfaces and/or tooth transition areas and/or interdental areas and/or gingival areas of several, preferably all, upper and/or lower teeth of the user can be attended.

Hence, it is facilitated that not the whole device as such has to be moved, but at least one certain "retaining" part of the device can be held in place - e.g. by the user's hand or by biting with the front teeth onto said retaining part or by applying a retaining force to the retaining part with the tongue pressing the retaining part against the palate - while the at least one shuttle unit is moved - particularly by moving the arm - in order to attend, preferably all, upper and/or lower teeth of the user.

The at least one retaining part can be used for mounting the at least one moveable arm. Accordingly, the area of the retaining part where the arm is mounted in a moveable, and preferably rotatable, way is either outside or within the user's oral cavity during the intended use of the device according to the present invention. Typically, in cases where said region of the retaining part is outside the user's oral cavity during the intended use of the device, the moveable arm extends from the retaining part with a length which is variable and which allows attending all teeth of the whole lower and/or upper dentition. In cases, where said region of the retaining part is within the user's oral cavity during the intended use of the device, the moveable arm can extend from the retaining part with a length which may be constant (but can be variable too, of course) and which also allows attending all teeth of the whole lower and/or upper dentition.

Furthermore, it is possible that the at least one cleaning chamber element and the at least one shuttle unit, respectively, can be moved along the arm (alternatively or additionally to a variable arm length), particularly parallel (back and forth) to a length axis of the arm.

Embodiments where the retaining part does not have to be inserted (partially or as a whole) into the user's oral cavity might be advantageous in terms of the user's comfort.

In order to further speed up the cleaning process, simultaneous cleaning of both the upper and the lower teeth of the user can be enabled. Accordingly, in a particularly preferred embodiment of the device according to the present invention, it is provided that the device comprises at least two shuttle units, each with the at least two transducers arranged opposite each other, wherein the at least two shuttle units are mounted, preferably symmetrically, on the at least one moveable arm, preferably in a rotatable way, wherein the drive unit is provided for moving the at least one arm and the at least two shuttle units, in order to iteratively move the cleaning chamber elements of the at least two shuttle units to adjacent positions such that tooth surface regions and/or chewing surfaces and/or tooth transition areas and/or interdental areas and/or gingival areas of several, preferably all, upper and lower teeth of the user can be attended.

Generally, the at least one cleaning chamber element - and thus also the at least one processing volume - can be moved continuously or intermittently, in order to attend all teeth of the user. This movement can be matched with the pumping/drawing of the dentifrice fluid, in order to allow for optimised cleaning parameters when cleaning not only a few, but all teeth. Accordingly, in a particularly preferred embodiment of the device according to the present invention, it is provided that the drive unit is configured to generate the iterative movement in a continuous or an intermittent way.

In order to allow for reliably attending both front and back teeth, particularly of both rather small and large dentitions, in a particularly preferred embodiment of the device according to the present invention, it is provided that the length of the at least one arm can be varied. Said variation is done in a controlled, and preferably automated, way by means of the drive unit.

Accordingly, the at least one shuttle unit can be moved by moving the arm and varying its length, in order to attend, preferably all, upper and/or lower teeth of the user.

Additionally or alternatively, the at least one shuttle unit can be moved along the at least one arm. In a particularly preferred embodiment of the device according to the present invention, it is provided that the at least two transducers are arranged on the at least one shuttle unit in a pivotable way. This enables movement/tilting of the transducers in a "radial" direction when following the dentition. Hence, different widths of the teeth and imperfect arrangement of the teeth along the arcuate shape of the dentition can be accounted for.

This guarantees a comfortable cleaning process for the user, since the transducers can retreat (at least to some extent), if necessary.

In order to enable a particularly simple and reliable mechanical construction allowing for pivoting the transducers in the radial direction, in a particularly preferred embodiment of the device according to the present invention, it is provided that the at least two transducers are pivotable about pivot axes, wherein the pivot axes run transverse, preferably normal, to a rotational axis, about which rotational axis the at least one shuttle can be rotated on the at least one arm. Hence, the shuttle unit can be smoothly moved along the dentition, without compromising the user's comfort.

In a particularly preferred embodiment of the device according to the present invention, it is provided that at least one spring element is provided for pivoting the at least two transducers into certain orientations. Said pivoting is preferably done about the pivot axes.

The at least one spring element allows for pushing the transducers toward the tooth/teeth to be currently cleaned, wherein the at least one cleaning chamber element can be arranged at least in sections between the respective transducer and the tooth/teeth to be currently cleaned (i.e. viewed in a direction from the transducer to the tooth/teeth to be currently cleaned those sections are arranged behind the transducer and before said tooth/teeth). This in turn allows for reliably sealing (at least to some extent as described above) of the processing volume by means of the at least one contact section, particularly by sealing lips of the contact section. Not only is the cleaning efficiency accordingly improved, but also a too high dentifrice fluid consumption is avoided.

The cleaning efficiency is further improved by the fact that the cleaning chamber element being arranged at least in sections between the transducer and the tooth/teeth to be currently cleaned and accordingly being pushed with its at least one contact section against the tooth/teeth to be currently cleaned establishes a defined distance between the transducer and said tooth/teeth. This distance can thus be optimised by appropriately designing the cleaning chamber element and its transducer pad, respectively, in order to allow for a maximum of cleansing action of the ultrasound emitted by the transducer at the surface(s) to be cleaned.

The at least one spring element can be realised in many different ways. For example, a flat spring or a spiral spring can be conceived as spring element, which has one end supported by a bottom of the shuttle or by the arm and which pushes or pulls with the other end on the respective transducer if the latter is moved out of an equilibrium position. Another example would be a leg spring, wherein each leg can be used for pushing toward one transducer.

For enabling pivoting of the transducers by means of the spring element the latter can be connected to the respective transducer pad section of the cleaning chamber element, with the transducer pad preferably being in sections arranged between the corresponding region of the spring element and the transducer. Preferably, said connection is pivotable, for allowing a particularly good alignment of the transducer and the transducer pad, respectively, with the tooth/teeth to be cleaned actually.

For good order's sake it is noted that the spring element can also be used in this way for mounting the cleaning chamber element in a releasable way, allowing for replacing the cleaning chamber element easily.

This in turn allows for moving the transducers to some extent along the gumline in the following way: Incisors have a larger visible height than molars, which influences the position of the gumline and the gum and gingival areas to be cleaned, respectively. On the other hand, incisors and molars significantly differ in terms of their depth, which is greater for molars. By pivoting the transducers the effective height of the transducer (measured from the respective pivot point/axis to the free end of the transducer) can be reduced and at the same time the distance between two opposing transducers is increased (at least in the region of their free ends). Consequently, the transducers pass the molars along the lower gumline with a larger distance to each other and pass the incisors along the higher gumline with a shorter distance to each other.

In a preferred embodiment of the device according to the present invention, it is provided that the ultrasound is appropriate to resonate and/or to collapse and/or to move the microbubbles in the dentifrice fluid having a diameter in the range of 1 µm to 500 µm, preferably in the range of 1 µm to 50 µm, more preferably in the range of 5 µm to 40 µm. On the one hand, this means that the ultrasound frequency is appropriately adjusted to said microbubble sizes. On the other hand, the ultrasound intensity is kept rather low, such that essentially only resonating (resonantly oscillating) and/or collapsing and/or moving of the microbubbles occur. This means that there is essentially no inertial cavitation, and there is no danger of damaging the tissue. Nevertheless, a cleansing action by the above-described effects caused by microbubble-induced shear stresses is generated, which can occur as a consequence of non-inertial cavitation.

The mentioned range of microbubble sizes or diameters can account for different kind of biofilm / plaque / adhering particles to be removed. "Adhering particles" particularly refer to bacteria colonies, wherein the latter can have different sizes and may grow to form a biofilm. Hence, the specified range of microbubble sizes can be used to remove bacteria and bacteria lumps/colonies with different sizes.

Accordingly, at least a certain amount of the microbubbles, preferably 80% of the volume of all microbubbles, is produced within said size ranges, particularly within a size range of 1 µm to 50 µm, while the remaining microbubbles can be outside said size ranges (i.e. with smaller and/or larger diameters).

By analogy to the above, in a preferred embodiment of the method according to the present invention, it is provided that the ultrasound is generated appropriately to resonate and/or to collapse and/or to move the microbubbles in the dentifrice fluid having a diameter in the range of 1 µm to 500 µm, preferably in the range of 1 µm to 50 µm, more preferably in the range of 5 µm to 40 µm.

In order to guarantee the presence of microbubbles in the dentifrice fluid with sizes optimized for cleaning, in a preferred embodiment of the device according to the present invention, it is provided that the microbubble unit is configured for generating the microbubbles in the dentifrice fluid with diameters in the range of 1 µm to 500 µm, preferably in the range of 1 µm to 50 µm, more preferably in the range of 5 µm to 40 µm. Analogously, in a preferred embodiment of the method according to the present invention, it is provided that the microbubbles are generated in the dentifrice fluid with diameters in the range of 1 µm to 500 µm, preferably in the range of 1 µm to 50 µm, more preferably in the range of 5 µm to 40 µm.

For the sake of completeness it is noted that transducers can be specifically designed and/or driven for applying a range of frequencies corresponding to the range of microbubble sizes. Accordingly, in a preferred embodiment of the device and/or method according to the present invention, it is provided that the frequency of the ultrasound generated by the at least one transducer is in the range of 100 kHz to 500 kHz, preferably in the range of 200 kHz to 330 kHz. It has already been noted that the ultrasound intensity can be kept rather low while still achieving outstanding cleaning results. Accordingly, in a preferred embodiment of the device and/or method according to the present invention, it is provided that the intensity of the ultrasound generated by the at least one transducer is in the range of 1 W/cm² to 30 W/cm², preferably 5 W/cm² to 20 W/cm², more preferably 8 W/cm² to 12 W/cm². In a preferred embodiment of the device according to the present invention, it is provided that the at least one transducer is configured for producing ultrasound in a pulsed manner, wherein the duty cycle of the at least one transducer is in the range of 1% to 30%, preferably in the range of 1% to 20%, more preferably in the range of 5% to 15%. In doing so, safety concerns of pressure and intensity can be further accommodated, while still producing effective ultrasound action.

Preferably, the duty cycle of each transducer is in the range of 1% to 30%, preferably in the range of 1% to 20%, more preferably in the range of 5% to 15%. By analogy to the above, in a preferred embodiment of the method according to the present invention, it is provided that the ultrasound is produced by the at least one transducer in a pulsed manner, wherein the duty cycle of the at least one transducer is in the range of 1% to 30%, preferably in the range of 1% to 20%, more preferably in the range of 5% to 15%.

As mentioned above the drive unit can be used for an automated movement of the at least one shuttle unit and hence for an automated cleaning of the user's teeth (more precisely, of at least the upper or lower teeth of the user). In doing so an electronic control unit can be provided, which controls the drive unit.

Furthermore, the electronic control unit allows for controlling quite complicated sequences of movements. Particularly, an oscillatory or vibratory movement can be realised for an appropriate movement of the abrasive cleaning elements, without the need for a specific separate vibration generator. Accordingly, in a particularly preferred embodiment of the device according to the present invention, it is provided that an electronic control unit controls the drive unit, wherein the electronic control unit is configured to move the at least one shuttle unit in an oscillatory way with a directional component along the at least one arm. The latter particularly accounts for a movement parallel (back and forth) to a length axis of the arm, wherein the at least one shuttle unit can be moved on and/or together with the arm. Of course also further directional components normal to the length axis of the arm are possible, wherein said further directional components can be generated by rotating the arm, for example.

Hence, the at least one shuttle unit can be oscillated on the chewing surfaces of and along the upper/lower dentition.

In order to facilitate an efficient cleaning by means of the abrasive cleaning elements, the latter are oscillated or vibrated with at least one suitable (relatively low) frequency, e.g. with about 300 Hz, as mentioned above. Accordingly, in a particularly preferred embodiment of the device according to the present invention, it is provided that the frequency of the oscillatory movement is in the range of 50 Hz to 700 Hz, preferably in the range of 100 Hz to 500 Hz, more preferably in the range of 250 Hz to 350 Hz.

The electronic control unit not only can control the drive unit, but can control further parameters influencing the cleaning process. In doing so, information from different sensors can be processed by the electronic control unit. Accordingly, in a preferred embodiment of the device according to the present invention, it is provided that at least one volume flow sensor is provided for detecting the volume flow of the dentifrice fluid, wherein the volume flow sensor is connected to an electronic control unit.

The volume flow sensor can be realized, e.g. by means of a current sensor measuring the current of a pump used for pumping/drawing the dentifrice fluid into the processing volume - the higher the current, the higher the volume flow and vice versa. In this case, the information from the volume flow sensor can be used, e.g. to ensure that there are enough fresh microbubbles (i.e. enough fresh dentifrice fluid with the certain microbubble size / size distribution / concentration) in the processing volume, thereby guaranteeing a high cleaning efficiency. Moreover, the volume flow sensor can be used in said case, e.g. to realize a safety feature, in order to prevent dry running of the pump and hence to prevent damage of the pump.

As mentioned the user may bite onto a certain part of the device during the cleaning process. In order to avoid damage caused by a too high bite force, in a preferred embodiment of the device according to the present invention, it is provided that at least one force sensor is provided for measuring the bite force of the user, wherein the force sensor is connected to an electronic control unit and wherein the electronic control unit is configured to stop and/or prevent operation of the device if the measured bite force is above a critical value. In a particularly preferred embodiment of the device according to the present invention, it is provided that an electronic control unit controls the drive unit, wherein the electronic control unit provides for a release mode allowing free movement of the at least one shuttle unit, and preferably of the at least one arm. This means that the electronic control unit can provide a safety measure allowing the user to remove the device, more precisely the shuttle unit and preferably a corresponding part of the moveable arm, easily out of the user's oral cavity.

In a preferred embodiment of the device according to the present invention, it is provided that an electronic control unit controls the at least one transducer and is configured to carry out the following step: applying the ultrasound to the dentifrice fluid in the at least one processing volume such that the ultrasound application comprises a first sequence of pulses comprising at least one first pulse with at least one first mean intensity and at least one second pulse, which is applied after the first pulse and which has at least one second mean intensity, wherein the first mean intensity is configured to move the microbubbles in the dentifrice fluid toward the at least one tooth surface region and/or the at least one chewing surface and/or the at least one tooth transition area and/or at least one interdental area and/or at least one gingival area, wherein the second mean intensity is greater than the first mean intensity and is configured to generate microbubble induced shear stresses, in order to produce a cleansing action of the microbubbles on the at least one tooth surface region and/or the at least one chewing surface and/or the at least one tooth transition area and/or the at least one interdental area and/or at least one gingival area. A pulse is characterized by its duration for a certain (rather short) amount of time. The mean intensity is the mean value of the intensity averaged over the duration of the pulse. Generally, the actual intensity does not need to be constant over the duration of the pulse, i.e. a ramp or an amplitude modulation is possible, for example. Application of the at least one second pulse after the at least one first pulse does not necessarily mean that the second pulse follows the first pulse immediately. For example, there might be a, preferably short, pause and/or at least one further pulse in-between. Said further pulse could have a mean intensity too low to generate bubble movement or too high for generating the microbubble-induced shear stresses, for example.

Several first pulses - particularly with different first mean intensities, each configured for generating microbubble movement - and/or several second pulses - particularly with different second mean intensities, each configured for generating microbubble-induced shear stresses - are possible. It turns out that by way of this specific kind of ultrasound application the cleaning performance can be dramatically increased. The reason for the increased cleaning efficiency is that with the first pulse the microbubbles are specifically moved to the at least one surface to be cleaned, wherein the first pulse has the lower mean intensity, which is sufficiently high to move the microbubbles, but low enough not to produce the cleansing action (although a cleansing action cannot be completely excluded). This means that the microbubbles stay in the dentifrice/cleaning fluid during the first pulse (in other words the first pulse does not remove the microbubbles from the dentifrice/cleaning fluid). Note that the movement of the microbubbles includes a movement to a node of the ultrasound wave close to the surface to be cleaned where microbubbles can gather, can form clusters, can agglomerate or can sometimes even coalesce.

When the second pulse, which has the higher mean intensity, acts on the microbubbles, the microbubbles predominantly are in the region where the cleansing action is needed - and not elsewhere in the dentifrice/cleaning fluid, where no or only little cleansing action on the at least one surface to be cleaned can be effected.

The microbubble-induced shear stresses generated due to the second mean intensity of the second pulse stem from at least the following effects:
- The ultrasound generates acoustic streaming in the dentifrice/cleaning fluid, the strength of which is according to the second mean intensity sufficiently great to wash the microbubbles away over the (preferably dental) surface to be cleaned, thereby detaching biofilm / plaque / adhering particles from said surface.
- The microbubbles are oscillated by the second pulse. These oscillations cause the fluid close to the microbubbles to move in a way which is known as "microstreaming", wherein the shear forces associated with said microstreaming generate a scrubbing action displacing or loosening biofilm/plaque and other adhering particles from the (preferably dental) surfaces to be cleaned.
- The microbubbles are collapsed, wherein pressure gradients are generated and microjets of the surrounding liquid fill the void which leads to shear forces that disrupt unwanted coatings / contaminants from the surface to be cleaned, allowing for, e.g. the disruption of biofilm / plaque / adhering particles at (preferably dental) surfaces to be cleaned.

As mentioned before, inertial cavitation can be excluded essentially, while non-inertial cavitation can account for the above-mentioned microbubble-induced shear stresses.

By analogy to the above, in a preferred embodiment of the method according to the present invention, it is provided that the ultrasound is applied to the dentifrice fluid in the at least one processing volume such that the ultrasound application comprises a first sequence of pulses comprising at least one first pulse with at least one first mean intensity and at least one second pulse, which is applied after the first pulse and which has at least one second mean intensity, wherein the first mean intensity is configured to move the microbubbles in the cleaning fluid toward the at least one tooth surface region and/or the at least one chewing surface and/or the at least one tooth transition area and/or at least one interdental area and/or at least one gingival area, wherein the second mean intensity is greater than the first mean intensity and is configured to generate microbubble induced shear stresses, in order to produce a cleansing action of the microbubbles on the at least one tooth surface region and/or the at least one chewing surface and/or the at least one tooth transition area and/or the at least one interdental area and/or at least one gingival area.

Of course, the described kind of ultrasound application can be used to improve the ultrasound cleaning performance not only when it comes to the cleaning of teeth, but for general / deliberate surfaces to be cleaned. This means there is a plenty of different applications, comprising e.g. cleaning of semiconductor wafers. Accordingly, in a method for ultrasonic cleaning at least one surface to be cleaned according to the present invention, it is provided that the method comprises the following steps:
- providing a cleaning fluid in at least one processing volume, wherein the cleaning fluid contacts the surface to be cleaned, and wherein microbubbles are contained and/or created in the cleaning fluid in the at least one processing volume; - generating ultrasound, preferably by means of at least one transducer, and applying the ultrasound to the cleaning fluid in the processing volume, wherein the ultrasound application comprises a first sequence of pulses comprising at least one first pulse with at least one first mean intensity and at least one second pulse, which is applied after the first pulse and which has at least one second mean intensity, wherein the first mean intensity is configured to move the microbubbles in the cleaning fluid toward the surface to be cleaned, and wherein the second mean intensity is greater than the first mean intensity and is configured to generate microbubble induced shear stresses, in order to produce a cleansing action of the microbubbles on the surface to be cleaned.

As mentioned before in connection with dental cleaning, in the method according to the invention, the microbubbles can be created before the cleaning liquid enters the processing volume or exclusively or additionally afterwards. Various methods for the creation of the microbubbles are possible, including applying ultrasound to an oversaturated cleaning liquid, e.g. oversaturated with COz. In this case, COz microbubbles are created by the reduced pressure in the ultrasonic field.

In general, the ultrasound is applied by means of at least one ultrasound emitter. The latter can be, e.g. a transducer or a waveguide coupled to a transducer.

The ultrasound is not necessarily directed toward the surface to be cleaned. The microbubbles are moved also e.g. into interdental areas or in general to surface parts that are not directly observable along the viewing direction from the ultrasound source.

It is conceivable to use different ultrasound emitters and transducers, respectively, for the application of the at least one first pulse and of the at least one second pulse. It is also possible, for example, that a first ultrasound emitter is used for generating both the first and second pulses and a second ultrasound emitter is used for applying also the first and second pulses to the cleaning liquid, but from a different location. In this case it is imaginable that the first ultrasound emitter is applying the at least one first pulse simultaneously with the second ultrasound emitter applying the at least one second pulse and vice versa.

In order to clean particularly thoroughly, several sequences with first and second pulses can be applied consecutively. Accordingly, in a particularly preferred embodiment of the device according to the present invention, it is provided that the electronic control unit is configured to carry out the following step:
applying at least one second sequence of pulses to the dentifrice fluid in the at least one processing volume after the first sequence of pulses, wherein the at least one second sequence of pulses comprises the at least one first pulse and the at least one second pulse after the first pulse. By analogy to the above, in a particularly preferred embodiment of the methods (on the one hand for cleaning at least in sections teeth and/or interdental areas and/or gingival areas of a user, and on the other hand for ultrasonic cleaning of at least one surface to be cleaned) according to the present invention, it is provided that at least one second sequence of pulses is applied to the dentifrice fluid in the at least one processing volume after the first sequence of pulses, wherein the at least one second sequence of pulses comprises the at least one first pulse and the at least one second pulse after the first pulse. This holds not only for
the case of dental cleaning, but also for the above-mentioned general case with deliberate surfaces to be cleaned.

In light of the aforesaid also a system according to the present invention is provided, the system comprising a device according to the present invention and the dentifrice fluid.

The invention will be explained in closer detail by reference to preferred embodiments, with
- Fig. 1: showing a schematic sectional view of a detail of an embodiment of a device according to the invention during intended use, the device having a further transducer for cleaning of chewing surfaces;
- Fig. 2: illustrating schematically an interdental area;
- Fig. 3: illustrating schematically a gingival area;
- Fig. 4: showing a schematic sectional view of a detail of an embodiment of the device according to the invention during intended use, the device having abrasive cleaning elements for cleaning of the chewing surfaces;
- Fig. 5: showing a schematic perspective view of an embodiment of the device according to the invention, the device having a palatal constraint element as a retaining part of the device;
- Fig. 6: showing a schematic perspective detail view of the device of Fig. 5;
- Fig. 7: showing a schematic perspective detail view of a cleaning chamber element in form of a cushion element having abrasive cleaning elements;
- Fig. 8: showing a schematic sectional view of a detail of an embodiment of the device according to the invention during intended use, the device having spring elements for pivoting transducers of the device;
- Fig. 9: illustrating the application of ultrasound in a first sequence of a first and a second pulse;
- Fig. 10: showing a schematic perspective view of an embodiment of the device according to the invention, wherein in contrast to the embodiment of Fig. 5 the device has no retaining part configured to be inserted into the user's oral cavity during intended use;
- Fig. 11: showing a schematic perspective view illustrating the operation and mechanism of a drive unit of the embodiment shown in Fig. 10.

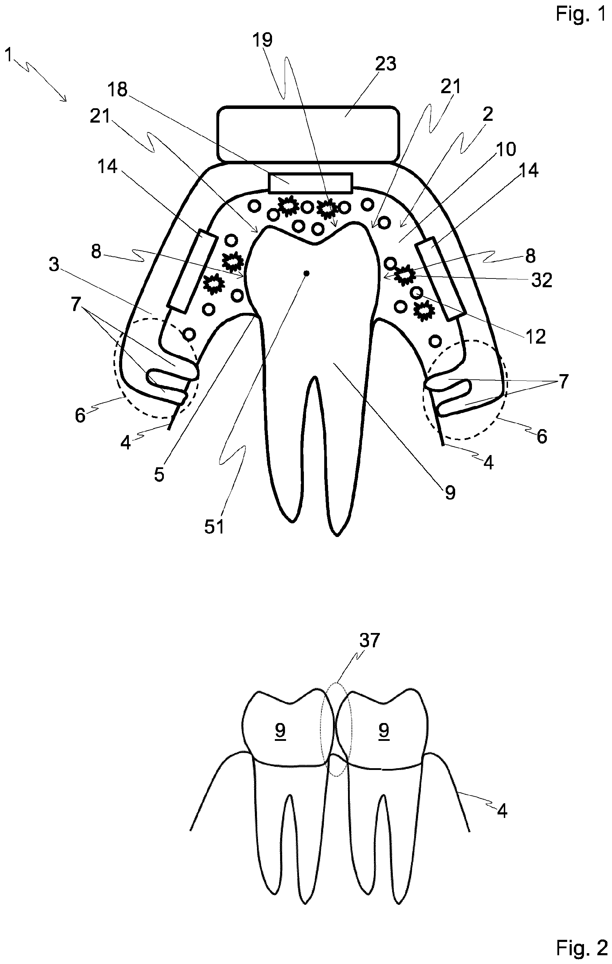

Fig. 1 shows a schematic sectional view of a detail of an embodiment of a device 1 for cleaning at least in sections teeth 9 and/or interdental areas 37 and/or gingival areas 15 of a user according to the invention during intended use. The device 1 comprises a cleaning chamber element 3 which is formed by a cushion element and configured to confining at least one processing volume 2 together with the gum 4 of the user and/or with at least one tooth surface region 8, each tooth surface region 8 belonging to a tooth 9 of the user and being adjacent to the gumline 5, and/or with at least one chewing surface 19 belonging to the at least one tooth 9 and/or with at least one tooth transition area 21 adjacent to the at least one chewing surface 19.

Fig. 2 illustrates an interdental area 37 (indicated by the dashed line in Fig. 2) between two adjacent teeth 9.

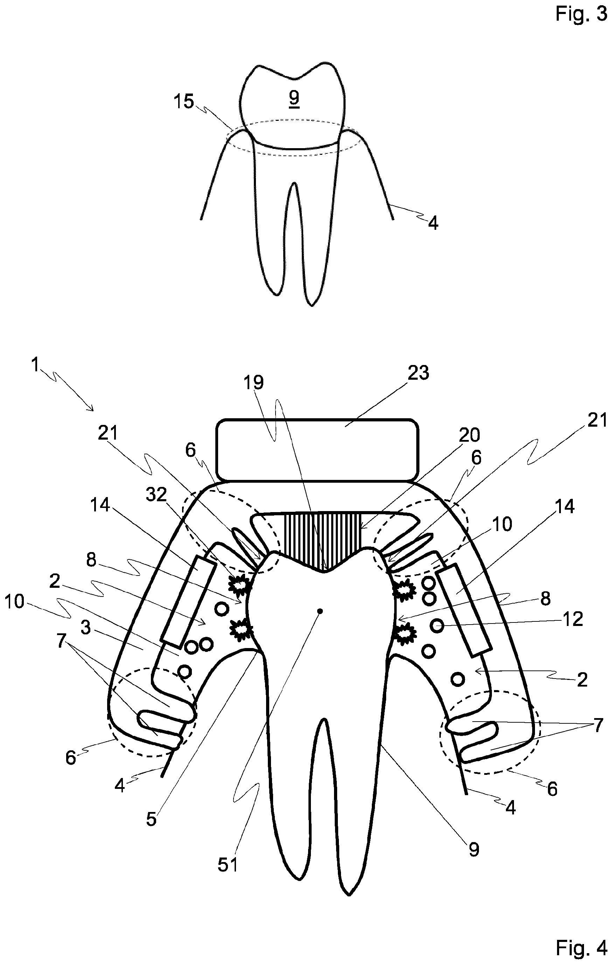

Fig. 3 illustrates a gingival area 15 (indicated by the dashed line in Fig. 3) in the region of the gum 4 close to a tooth 9. For the sake of completeness it is noted that each tooth 9 has along its circumference two (opposing) tooth surface regions 8 and two (opposing) further tooth areas 51, cf. Fig. 1 and Fig. 4, wherein along the tooth circumference each tooth surface region 8 is followed by a further tooth surface area 51 and vice versa. Naturally, the at least one processing volume 2 can be partially confined by the at least one further tooth area 51 as well.

In Fig. 1 one processing volume 2 is at least in sections confined by the cleaning chamber element 3 and by the gum 4, wherein the design of the cleaning chamber element 3 is crucial for the actual shape, dimension and geometry of the processing volume 2.

The cleaning chamber element 3 is not designed as mouthguard piece / mouthpiece covering all teeth, but is designed as a comparatively small piece such that tooth surface regions 8 and/or chewing surfaces 19 and/or tooth transition areas 21
and/or interdental areas 37 and/or gingival areas 15 of several, preferably all, upper and/or lower teeth 9 of the user can be attended by (necessarily) iteratively moving the cleaning chamber element 3 to adjacent positions.

For facilitating moving the cleaning chamber element 3 along the whole dentition, the cleaning chamber 3 is connected to a moveable arm 23.

The device further comprises at least one transducer 14 for generating ultrasound, wherein the at least one transducer 14 is configured to apply the ultrasound to a dentifrice fluid 10 in the at least one processing volume 2 such that ultrasound waves are directed toward the at least one tooth surface region 8 and/or the at least one chewing surface 19 and/or the at least one tooth transition area 21 and/or at least one interdental area 37 and/or at least one gingival area 15 for producing a cleansing action of microbubbles 12 in the dentifrice fluid 10 on the at least one tooth surface region 8 and/or the at least one chewing surface 19 and/or the at least one tooth transition area 21 and/or the at least one interdental area 37 and/or the at least one gingival area 15.

This means that cleaning is achieved not only by virtue of the ultrasound waves as such, but primarily by the action of the ultrasound on the microbubbles 12 in the dentifrice fluid 10.

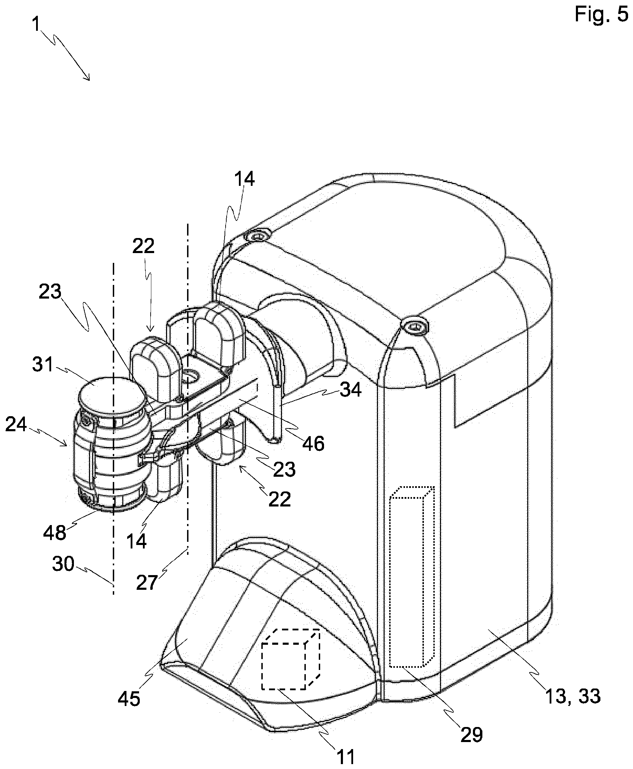

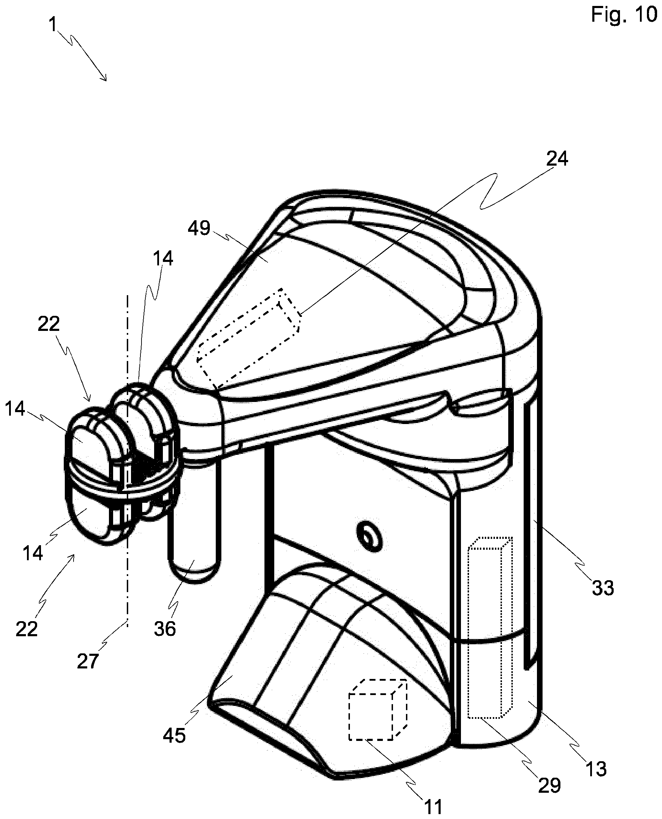

In the shown embodiments the microbubbles 12 are deliberately contained in the dentifrice fluid 10, already before the dentifrice fluid 10 enters the processing volume 2. In the shown embodiments this is achieved by means of a microbubble unit 13, cf. Fig. 5 or Fig. 10, which produces microbubbles 12 in the dentifrice fluid 10 with a certain initial size and/or a certain initial size distribution and/or an initial concentration in a certain range before the dentifrice fluid 10 enters the at least one processing volume 2, in order to provide for a certain size and/or a certain size distribution and/or a concentration in a certain range of the microbubbles 12 in the dentifrice fluid 10 in the processing volume 2. Typically, the initial concentration and/or the concentration is/are in the range of 0.01 vol.% to 15 vol.%, preferably in the range of 0.5 vol.% to 10 vol.%, more preferably in the range of 0.2 vol.% to 5 vol.%.

Alternatively or additionally, the microbubbles 12 can also be created when the dentifrice fluid 10 is already in the at least one processing volume 2. This means that it is not excluded that also in the shown embodiment at least some microbubbles 12 are additionally created by virtue of the ultrasound acting on the dentifrice fluid 10, e.g. if the dentifrice fluid 10 is oversaturated with COz and CO₂ microbubbles 12 are hence created by the reduced pressure in the ultrasonic field.

When the ultrasound waves act upon the microbubbles 12, different effects can be produced that lead to shear forces that apply to biofilm / plaque / adhering particles ("adhering particles" particularly refer to bacteria colonies, wherein the latter can have different sizes and may grow to form a biofilm) on the surfaces to be cleaned, particularly on the at least one tooth surface region 8 and/or the at least one chewing surface 19 and/or the at least one tooth transition area 21 and/or the at least one interdental area 37 and/or the at least one gingival area 15, which shear forces detach the biofilm / plaque / adhering particles. Said effects comprise movement of microbubbles 12, resonating/oscillating the microbubbles 12 and collapsing the microbubbles 12, wherein collapsing microbubbles 32 are schematically illustrated in Fig. 1 (and Fig. 4).

Apart from this cleansing action, the microbubbles 12 can also transport the detached particles away from the surfaces to be cleaned.

It is noted that the application of the ultrasound waves as described above is responsible for producing a cleansing action which is essentially free of inertial cavitation but which can comprise non-inertial cavitation. Correspondingly, rather low ultrasound intensities are used, which ultrasound intensities are unproblematic from a safety point of view (avoiding damage to soft tissue), but are sufficiently high for acting upon the microbubbles 12 for generating the mentioned cleansing action based on microbubble-induced shear stresses. Preferably, said ultrasound intensities are in the range of 1 W/cm² to 30 W/cm², preferably 5-20 W/cm², more preferably 8-12 W/cm². Except for the contained microbubbles 12, the dentifrice fluid 10 can be a known oral care liquid, particularly a dentifrice or mouthwash or any other liquid or semi-liquid or gel-like or semi-solid carrier material, including water and saliva substitutes, suitable for delivery to the user's oral cavity.

In Fig. 1 two transducers 14 are provided that are arranged opposite to each other, thus applying ultrasound from opposing sides to the tooth/teeth 9 arranged between the two transducers 14. Particularly, the two transducers 14 emit ultrasound toward opposing tooth surface regions 8 (buccal and lingual tooth surface regions 8) and tooth transition areas 21 (buccal and lingual tooth transition areas 21) and regions close to the gumline 5 comprising gingival areas 15 (cf. Fig. 3).

The at least one cleaning chamber element 3 is designed for contacting the gum 4 (cf. Fig. 1 and Fig. 4) of the user and/or the at least one tooth surface region 8 and/or the at least one chewing surface 19 and/or the at least one tooth transition area 21 (cf. Fig. 4) with at least one contact section 6, wherein the contact section 6 is configured to substantially seal the at least one processing volume 2 at least in the region of the gum 4 and/or the at least one tooth surface region 8 and/or the at least one chewing surface 19 and/or the at least one tooth transition area 21 such that the following is facilitated:
- filling of the processing volume 2 with the dentifrice fluid 10 and/or
- maintaining the processing volume 2 with the dentifrice fluid 10 with the microbubbles 12 having a certain size and/or a certain size distribution and/or a concentration in a certain range.

In Fig. 1 two contact sections 6 are provided, each having sealing lips 7 contacting the gum 4 during the intended use of the device 1. As a consequence one relatively large processing volume 2 is generated with parts on opposite sides of the tooth/teeth 9 being in fluid connection with each other.

The sealing lips 7 can be made of a material with advantageous sealing properties, e.g. of rubber or of a suitable plastic material or of silicone. In the shown embodiments the sealing lips 7 and the remaining cleaning chamber element 3 are made in one piece.

It is noted that filling does not necessarily mean that the processing volume 2 has to be filled completely full. It is further noted that on the one hand perfect sealing is not required. On the other hand imperfect sealing requires iterative, i.e. continuous or intermittent, filling or "refilling" of the processing volume 2, in order to account for dentifrice fluid 10 leaked out. Said refilling is not only easily established, but can also provide for "fresh" microbubbles 12 in the processing volume 2 if the dentifrice fluid 10 contains the microbubbles 12 already before entering the processing volume 2, as is the case in the shown embodiments. Due to the "refilling" dentifrice fluid 10 accumulates in the user's oral cavity in the course of the intended use of the device 1. Accordingly, the user spits out the used/accumulated dentifrice fluid 10 at least once after the overall cleaning process, preferably of all teeth 9, is finished, wherein it is conceivable that used/accumulated dentifrice fluid 10 is spit out at least once in the course of the overall cleaning process too (i.e. also before the overall cleaning process is finished).

For filling/refilling the processing volume 2, in the shown embodiments the device 1 further comprises at least one pump element 11, cf. Fig. 5 or Fig. 10, where the pump element 11 (schematically indicated by the dashed line) is arranged within a handhold 45 enabling a secure grip of the device 1 by the user. The pump element 11 is configured as double-acting pump for pumping the dentifrice fluid 10 from a tank 33 into the at least one processing volume 2. The microbubble unit 13 is switched in-between, and can be physically located within the tank 33 or in the region of the tank 33.

For achieving excellent cleaning results, the ultrasound frequency can be adjusted to the size of the microbubbles 12, to resonate and/or to collapse and/or to move the microbubbles 12 in the dentifrice fluid 10. Particularly, the ultrasound can be appropriately chosen to resonate and/or to collapse and/or to move the microbubbles 12 in the dentifrice fluid 10 having a diameter in the range of 1 µm to 500 µm,preferably in the range of 1 µm to 50 µm, more preferably in the range of 5 µm to 40 µm. Preferably, 80% of the volume of all microbubbles 12 is produced, particularly by means of the microbubble unit 13, with the microbubbles 12 having a diameter within a size range of 1 µm to 50 µm. As mentioned above, surfaces that can be cleaned include interdental areas 37 as well as gingival areas 15. This means that with the device 1 areas can be cleaned, particularly from plaque and/or biofilm, that are inaccessible with conventional toothbrushes, but are accessible by means of the ultrasound and the ultrasound in combination with the microbubbles 12 in the dentifrice fluid 10, respectively. This means that in principle no additional cleaning devices are needed for cleaning these areas.

Naturally, also chewing surfaces 19 are accessible by means of the ultrasound and the ultrasound in combination with the microbubbles 12 in the dentifrice fluid 10, respectively. In order to improve the cleansing action on the chewing surfaces 19, in the embodiment shown in Fig. 1 a further transducer 18 is provided for generating ultrasound, wherein the at least one further transducer 18 is configured to apply the ultrasound to the dentifrice fluid 10 in the processing volume 2 such that ultrasound waves are directed toward the at least one chewing surface 19 for producing a cleansing action of the microbubbles 12 on the at least one chewing surface 19. Accordingly, the chewing surfaces 19 are specifically targeted by means of the further transducer 18.

In Fig. 4 an embodiment is shown, where abrasive cleaning elements 20 formed by bristles on the cleaning chamber element 3 are provided alternatively to the further transducer 18 for abrasively cleaning the chewing surface(s) 19.

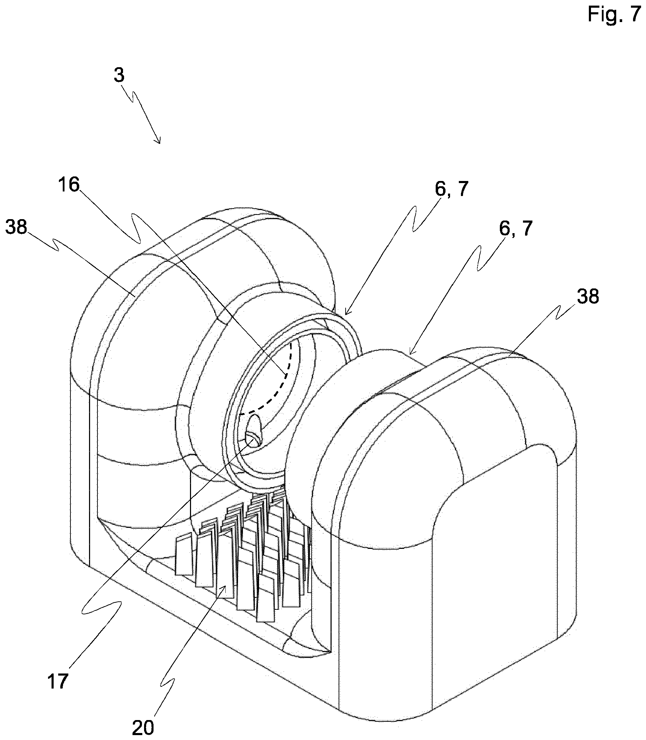

Fig. 7 shows a cleaning chamber element 3 with abrasive cleaning elements 20 formed by filaments that are made in one piece with the remaining cleaning chamber element 3, wherein the cleaning chamber element 3 is preferably made of silicone. Not only allows this for an easy and economic manufacturing of the abrasive cleaning elements 20. Moreover, transducer pads 38, i.e. sections of the cleaning chamber element 3 that are configured to cover the transducers 14, allow for a good mechanical protection of the transducers 14; and the contact sections 6, each with two concentric circular sealing lips 7, allow for sufficient sealing of the resulting two processing volumes 2. The latter can be seen in Fig. 4, wherein in the sectional view of Fig. 4 it is discernible that the sealing lips 7 of each circular contact section 6 contact inter alia the gum 4 and the tooth transition areas 21 of the tooth/teeth 9.

The cleaning chamber element 3 of Fig. 7 is configured as a replaceable part. Hence, the abrasive cleaning elements 20 can be easily renewed from time to time, simply by replacing the cleaning chamber element 3. Moreover, replacing the cleaning chamber element 3 from time to time generally ensures optimum hygienic conditions, particularly with respect to the transducer pads 38.

In the perspective view of Fig. 7 an outlet opening 17 disposed in the cleaning chamber element 3 is discernible. The outlet opening 17 is arranged within a region of the transducer pad 38 enclosed by the sealing lips 7. Actually, the two transducer pads 38 of the embodiment shown in Fig. 7 are designed symmetrically, i.e. also the second transducer pad 38 comprises an outlet opening 17 arranged within a region enclosed by the associated sealing lips 7. Each outlet opening 17 allows for easy filling of the respective processing volume 2 with the dentifrice fluid 10, which preferably already contains the microbubbles 12.

In the embodiment shown in Fig. 7, each outlet opening 17 is geometrically designed and arranged such that the dentifrice fluid 10 leaves the outlet opening 17 with a direction having at least a component toward the at least one transducer 14. This means that during the intended use of the device 1 the dentifrice fluid 10 is pumped into the respective processing volume 2, wherein the dentifrice fluid 10 enters the processing volume 2 through the associated outlet opening 17 at least slightly toward the respective transducer 14. This guarantees that the ultrasound generated by the transducer 14 can affect the microbubbles 12 in the dentifrice fluid 10 optimally.

It is noted that there is no additional means for directing dentifrice fluid 10 to the abrasive cleaning elements 20. However, at least some dentifrice fluid 10 is delivered also to cleaning elements 20 due to the unavoidable leakage of dentifrice fluid 10 out of the processing volumes 2, further improving the cleaning efficiency of the abrasive cleaning elements 20.

In the shown embodiments, the at least one transducer 14 is covered by the at least one transducer pad 38 of the cleaning chamber element 3 only in sections. Each transducer pad 38 has an opening 16 (indicated in Fig. 7 by the dashed line), through which contact of the dentifrice fluid 10 with the transducer 14 - more precisely with a fluid proof housing of the transducer 14 - is enabled. This means that the at least one transducer 14 is arranged such that the ultrasound waves are directed through the at least one opening 16 and the dentifrice fluid 10 can get through the cleaning chamber element 3 toward the at least one transducer 14 for an optimum coupling of the ultrasound waves into the dentifrice fluid 10. In Fig. 5 an embodiment of the device 1 is shown in perspective view, without cleaning chamber elements 3. As detailed above, two transducers 14 are provided that are arranged opposite each other. The two transducers 14 allow for speeding up the cleaning process, since simultaneous cleaning of opposing surfaces of the tooth/teeth 9 arranged between the two transducers 14 is enabled. These two transducers 14 are part of a shuttle unit 22 dedicated for the cleaning of the upper or lower teeth 9. For achieving a maximum cleaning efficiency and speed a second shuttle unit 22 is provided, which also comprises two transducers 14 arranged opposite each other for enabling simultaneous cleaning of opposing surfaces of the tooth/teeth 9 arranged in-between. The second shuttle unit 22 is dedicated for cleaning of the lower or upper teeth, i.e. both the upper and the lower teeth can be cleaned simultaneously by means of the two shuttle units 22. Accordingly, the second shuttle unit 22 is designed essentially like the first shuttle unit 22, but is symmetrically arranged upside-down with respect to the first shuttle unit 22. In the embodiment of Fig. 5 each shuttle unit 22 is mounted on a moveable arm 23 and can be rotated on the respective arm 23 about a respective rotation axis 27. A drive unit 24 is provided for moving the arms 23 and the shuttle units 22, in order to iteratively move the respective shuttle unit 22 and the associated cleaning chamber element 3 to adjacent positions such that tooth surface regions 8 and/or chewing surfaces 19 and/or tooth transition areas 21 and/or interdental areas 37 and/or gingival areas 15 of several, preferably all, upper and lower teeth 9 of the user can be attended.

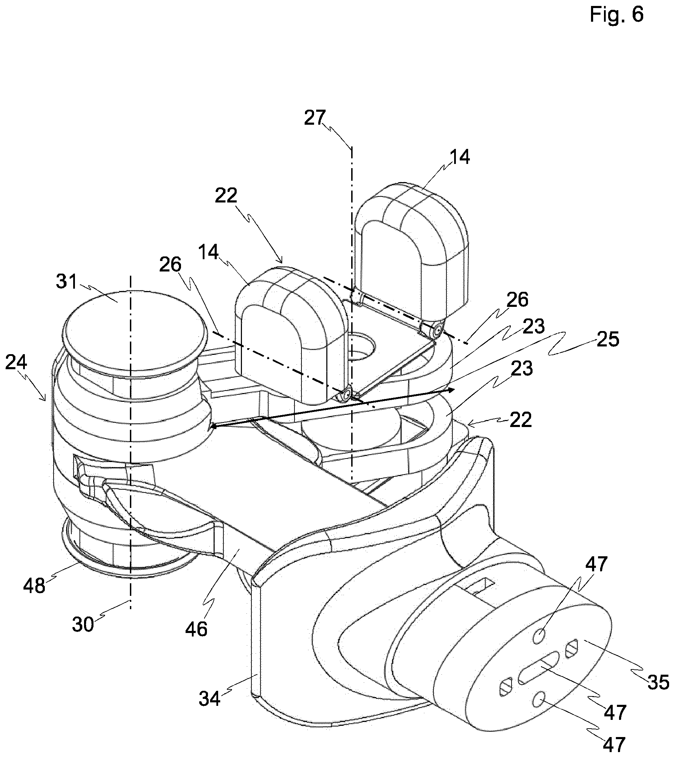

The moveable arms 23 are mounted on the drive unit 24 and extend from the drive unit 24 with an arm length 25 (cf. Fig. 6) of typically 1 cm to 4 cm. The moveable arms 23 can be rotated by the drive unit 24 about a rotation axis 30. Rotating the arms 23 translates the shuttle units 22 along a curved path following the user's dentition. In order to have the transducers 14 of each shuttle unit 22 perfectly oriented with the actual tooth/teeth 9 to be cleaned arranged in-between, each shuttle unit 22 is rotated about the respective rotation axis 27 according to the current position along the user's dentition.

The rotation of the shuttle units 22 can be driven by the drive unit 24 or can be effectuated by the teeth 9 arranged between the transducers 14 and pushing against the transducers 14 and the associated cleaning chamber element 3, respectively.

Moreover, in order to be able to account for different jawbone widths (particularly according to people's different body sizes), embodiments are conceivable where the shuttle units 22 can be moved along the arms 23 and/or the arm length 25 can be varied. Alternatively, different versions of the device 1 can be provided, each version having an arm length 25 adapted for a certain jawbone size, e.g. one version adapted for children and one for adults.

In Fig. 5 the position of the arms 23 and shuttle units 22 is perfectly suited for cleaning the incisors, whereas Fig. 6 shows the arms 23 and shuttles 22 moved into an arrangement suited for cleaning the user's molars.

The iterative movement of the arms 23 and shuttle units 22 can into the processing volumes 2 is matched to said movement, i.e. is done either continuously or intermittently.

During the cleaning process the user holds the device 1 in one or both of his hands and can use the handhold 45 for that purpose. The drive unit 24 is in the user's mouth. A palatal constraint element 31 acts as retaining element which contributes to holding the device 1 in place in that a force is exerted with the user's tongue against a tongue constraint element 48 of the drive unit 24 which is supported with its palatal constraint element 31 at the user's palate.

Moreover, a mask 34, which is arranged between the user's incisors and lips during the intended use of the device 1 for providing a certain sealing of the user's mouth against unintentional discharge of dentifrice fluid 10 and the user's saliva, also contributes (at least to some extent) to holding the device 1 in place. A support bar 46 connects the mask 34 and the drive unit 24, i.e. the drive unit 24 is mounted on the support bar 46. The support bar 46 is arranged between the two arms 23. A connection element 35 connects the mask 34 and the support bar 46 with the tank 33. Within the support bar 46 and the connection element 35 channels 47 are provided. The channels 47 allow for a fluidic connection between the tank 33 and the pump element 11, respectively, on the one hand and the shuttle units 22 and cleaning chamber elements 3, respectively, on the other hand. Moreover, the channels 47 allow for a wire feedthrough, in order to provide electric energy to the drive unit 24. At least one battery (not shown) for supplying electric energy can be arranged in the tank 33 or in the region of the tank 33.

In the shown embodiments an electronic control unit 29 (in Fig. 5 and Fig. 10 schematically indicated by the dotted line) is provided for controlling the drive unit 24. The electronic control unit 29 allows for controlling quite complicated sequences of movements of the arms 23 and shuttle units 22, as mentioned above, particularly in an automated way.

Furthermore, the electronic control unit 29 can - and in the shown embodiments actually does - also control the pump element 11, in order to guarantee a perfect synchronization between the movement of the at least one shuttle unit 22 and the at least one cleaning chamber element 3, respectively, on the one hand and the filling / refilling of the at least one processing volume 2 on the other hand.

Furthermore, the electronic control unit 29 can - and in the shown embodiments actually does - also control the microbubble unit 13, particularly allowing for an adjustable initial size / initial size distribution / initial concentration and/or the wished size / size distribution / concentration of the created microbubbles 12. Particularly, in the shown embodiments the electronic control unit 29 is used to generate an oscillatory or vibratory movement of the shuttle units 22, said oscillatory or vibratory movement being appropriate for achieving a high cleaning efficiency of the abrasive cleaning elements 20 on the cleaning chamber elements 3 - without the need for a specific separate vibration generator. More precisely, the electronic control unit 29 is configured to move the at least one shuttle unit 22 in an oscillatory way with a directional component along the at least one arm 23. The latter particularly accounts for a movement parallel (back and forth) to a length axis of the at least one arm 23 - on the respective arm 23 and/or together with the respective arm 23. Of course also further directional components normal to the length axis of the arm 23 are possible, wherein said further directional components can be generated by rotating the arm 23. Hence, the shuttle units 22 can be oscillated on the chewing surfaces 19 of and along the upper/lower dentition.

In order to facilitate an efficient cleaning by means of the abrasive cleaning elements 20, the latter are oscillated or vibrated with at least one suitable (relatively low) frequency in the range of 50 Hz to 700 Hz, preferably in the range of 100 Hz to 500 Hz, more preferably in the range of 250 Hz to 350 Hz. In case where the at least one further transducer 18 is provided for the cleaning of the chewing surfaces 19, the electronic control unit 29 can also control the at least one further transducer 18. Generally, the electronic control unit 29 can also control the transducers 14 and the ultrasound generation with the transducers 14, respectively. For the sake of completeness it is mentioned that the electronic control unit 29 not only can control the drive unit 24, but of course can control further parameters influencing the cleaning process. In doing so, information from different sensors can be processed by the electronic control unit 29.

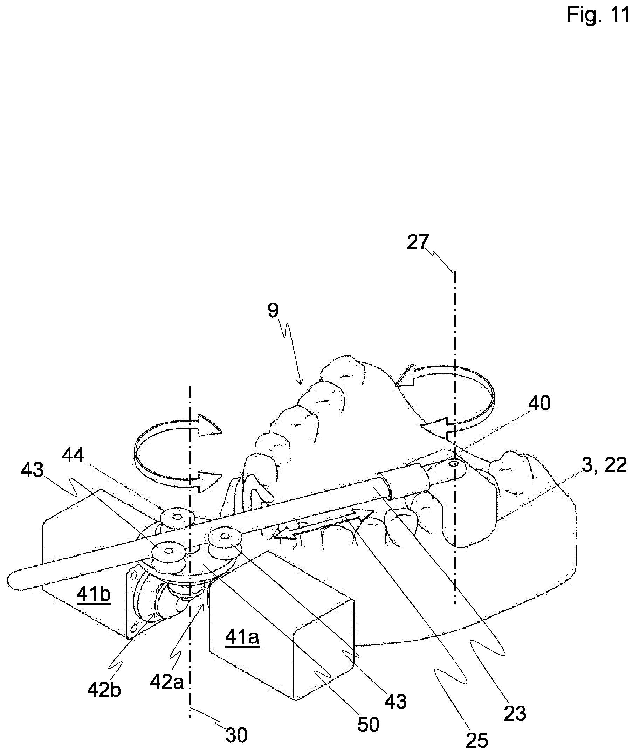

For example, a force sensor 40 can be provided, cf. Fig. 11, for measuring the bite force of the user, wherein the force sensor 40 is connected to the electronic control unit 29 and wherein the electronic control unit 29 is configured to stop and/or prevent operation of the device 1 if the measured bite force is above a critical value.

In the embodiment shown in Fig. 5 and Fig. 6 the two transducers 14 of each shuttle unit 22 are pivotable about pivot axes 26, wherein each pivot axis 26 runs normal to the rotation axis 27 of the shuttle units 22. In said embodiment the pivot axes 26 of the transducers 14 belonging to the same shuttle unit 22 are parallel to each other. This enables movement/tilting of the transducers 14 in a "radial" direction when following the dentition. Hence, different widths of the teeth 9 and imperfect arrangement of the teeth 9 along the arcuate shape of the dentition can be accounted for. This guarantees a comfortable cleaning process for the user, since the transducers 14 can retreat (at least to some extent), if necessary, and each shuttle unit 22 can be smoothly moved along the dentition, without compromising the user's comfort. For each shuttle unit 22 at least one spring element 28 is provided for pivoting the two transducers 14 of the respective shuttle unit 22 into certain orientations, particularly such that the two transducers 14 point to each other with their free ends, i.e. the two transducers 14 of one shuttle unit 22 are tilted toward each other by the at least one spring element 28 when nothing (particularly no tooth 9) is between them.

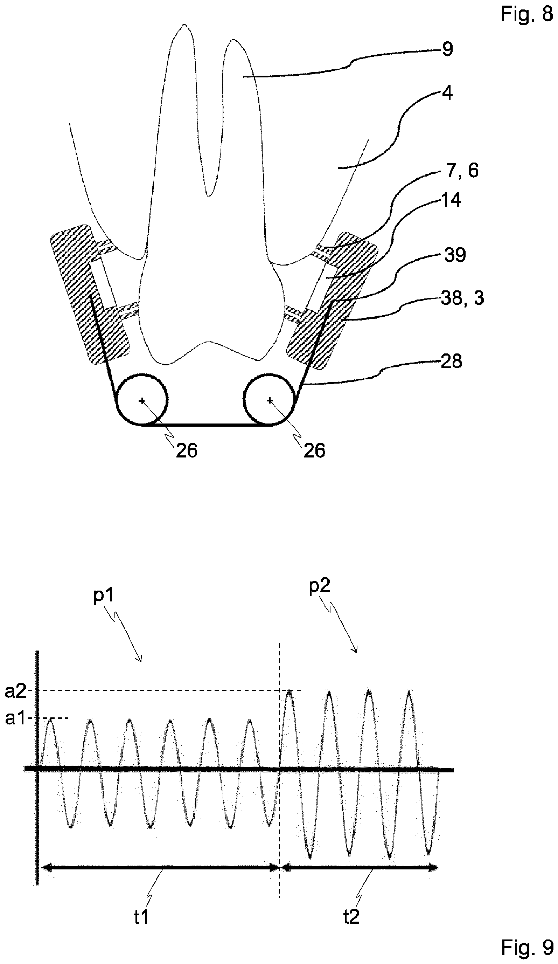

Fig. 8 illustrates one spring element 28 formed as a leg spring, having two legs, each leg trying to push one of the two transducers 14 of one shuttle unit 22 into said tilted orientation, thereby pressing the transducers 14 and the cleaning chamber elements 3, respectively against the tooth 9 and the gum 4.

In Fig. 8 the spring element 28 and its legs, respectively, do not contact the transducers 14 directly, but contact the transducer pads 38 of the cleaning chamber element 3, thereby fixing the cleaning chamber element 3 in a releasable way.

More precisely, the tip of each leg touches the respective transducer pad 38 and realises a pivotal connection 39 between the spring element 38 and the transducer pad 38. Accordingly, the transducer pads 38 are arranged in sections between the legs of the spring element 28 and the transducers 14.

During the intended use of the device 1 the at least one spring element 28 pushes the transducers 14 of each shuttle unit 22 toward the tooth/teeth 9 to be currently cleaned, as mentioned above. This in turn allows for reliably sealing (at least to some extent as described above) of the at least one processing volume 2 by means of the at least one contact section 6 of the at least one cleaning chamber element 3. Not only is the cleaning efficiency accordingly improved, but also a too high dentifrice fluid 10 consumption is avoided.

The cleaning efficiency is further improved by the fact that the cleaning chamber element 3 being arranged (at least in sections) between the transducer 14 and the tooth/teeth 9 to be currently cleaned and accordingly being pushed with its at least one contact section 6, particularly with the sealing lips 7, against the tooth/teeth 9 to be currently cleaned establishes a defined distance between the transducer 14 and said tooth/teeth 9. This distance can thus be optimised by appropriately designing the cleaning chamber element 3 and its transducer pads 38, respectively, in order to allow for a maximum cleansing action of the ultrasound emitted by the transducer 14 at the surface(s) to be cleaned. Typically said distance is in the range of 1 mm to 5 mm. As mentioned above, the electronic control unit 29 can control the transducers 14. Thereby, the electronic control unit 29 can be configured to apply the ultrasound to the dentifrice fluid 10 in the at least one processing volume 2 such that the ultrasound application comprises a first sequence of pulses comprising at least one first pulse p1 with at least one first mean intensity and at least one second pulse p2, which is applied after the first pulse p1 and which has at least one second mean intensity, wherein the first mean intensity is configured to move the microbubbles 12 in the dentifrice fluid 10 toward the at least one tooth surface region 8 and/or the at least one chewing surface 19 and/or the at least one tooth transition area 21 and/or the at least one interdental area 37 and/or the at least one gingival area 15, wherein the second mean intensity is greater than the first mean intensity and is configured to generate microbubble-induced shear stresses, in order to produce a cleansing action of the microbubbles 12 on the at least one tooth surface region 8 and/or the at least one chewing surface 19 and/or the at least one tooth transition area 21 and/or the at least one interdental area 37 and/or at least one gingival area 15.

It turns out that by way of this specific kind of ultrasound application the cleaning performance can be dramatically increased. The reason for the increased cleaning efficiency is that with the first pulse p1 the microbubbles 12 are specifically moved to the at least one surface to be cleaned, wherein the first pulse p1 has the lower mean intensity, which is sufficiently high to move the microbubbles 12, but low enough not to produce the cleansing action (although a cleansing action cannot be completely excluded). This means that the microbubbles 12 stay in the dentifrice fluid 10 during the first pulse p1 (in other words the first pulse p1 does not remove the microbubbles 12 from the dentifrice fluid 10). When the second pulse p2, which has the higher mean intensity, acts on the microbubbles 12, the microbubbles 12 predominantly are in the region where the cleansing action is needed - and not elsewhere in the dentifrice fluid 10, where no or only little cleansing action on the at least one surface to be cleaned can be effected. Fig. 9 illustrates an example of a corresponding first sequence of one first pulse p1 followed by one second pulse p2. The first pulse p1 has a constant amplitude a1 and the second pulse p2 has a constant amplitude a2 which is greater than amplitude a1. Accordingly the first mean intensity (which is proportional to the square of amplitude al), averaged over a first duration t1 of the first pulse p1, is smaller than the second mean intensity (which is proportional to the square of amplitude a2), averaged over a second duration t2 of the second pulse p2. For example, the second mean intensity can be in the range of 1.5 to 150 times the first mean intensity.

n the shown example of Fig. 9 the second duration t2 is smaller than the first duration t1, but also cases are possible with t2 = t1 or t2 > t1. Typically, the first duration t1 and the second duration t2 can be in the range from 5 ms to 50 ms, particularly from 10 ms to 35 ms. In Fig. 9 the second pulse p2 follows the first pulse p1 immediately, but in principle also, e.g. a pause in-between is possible, which pause can also be shorter or longer than or equal to the pulse durations t1, t2. Naturally, in order to clean particularly thoroughly, several sequences with first pulses p1 and second pulses p2 can be applied consecutively. Accordingly, the electronic control unit 29 can be configured to apply at least one second sequence of pulses to the dentifrice fluid 10 in the at least one processing volume 2 after the first sequence of pulses, wherein the at least one second sequence of pulses comprises the at least one first pulse p1 and the at least one second pulse p2 after the first pulse p1.

Fig. 10 shows an embodiment of the device 1 which differs from the embodiment shown in Fig. 5 by the mechanics for moving the at least one cleaning chamber element 3 and the at least one shuttle unit 22, respectively. Apart from that, the above-discussed details hold also for the embodiment of Fig. 10 and are hence not repeated.

In the embodiment of Fig. 10 there is no retaining part for holding the device 1 in place during the intended use, which needs to be inserted into the user's oral cavity. One retaining part is formed by a chin support 36 which can be pushed against the user's chin. But of course also the handhold 45 constitutes a retaining part, since it provides for a good grip of one or both hands of the user, allowing for a good fixation of the position of the device 1 during the intended use.

Also in the embodiment of Fig. 10 two shuttle units 22 are provided on one moveable arm 23 for simultaneously cleaning of lower and upper teeth 9. The shuttle units 22 are mounted on the arm 23 in a rotatable way and can be rotated about the rotation axis 27.

Channels (not shown) for providing the dentifrice fluid 10 to the at least one chamber element 3 and the at least one processing volume 2, respectively, and for the wiring of the transducers 14 are provided within the arm 23.

The moveable arm 23 extends from and can be moved by the drive unit 24. The drive unit 24 (in Fig. 10 indicated by the dash dotted line) is located in a drive unit housing 49. The drive unit 24 and the drive unit housing 49, respectively, stays outside the user's oral cavity and is arranged above the tank 33.

In Fig. 10 the shuttle units 22 are shown in a position ideally suited for cleaning the incisors.

Fig. 11 schematically illustrates the details of the mechanics and kinematics for moving the arm 23 and the shuttle units 22 along the whole dentition (for attending inter alia also molars), wherein for the sake of clarity only one shuttle unit 22 is shown.

The drive unit 24 comprises two electric motors 41a, 41b. The electric motor 41a can rotate a disc 50 via a gear transmission 42a. The rotation of the disc 50 is about the rotation axis 30 of the arm 23, since the arm 23 is mounted on the disc 50 such that its length axis runs through the rotation center of the disc 50. This means that the arm 23 is rotated together with the disc 50 about the rotation axis 30.

The arm 23 is mounted on the disc 50 not in a fixed way, but by means of two guiding pulleys 43 and on driving pulley 44, wherein the arm 23 is arranged between the two guiding pulleys 43 on the one hand and the driving pulley 44 on the other hand. When the driving pulley 44 is rotated, the arm 23 is accordingly moved along its length axis and thus the arm length 25 (with which the arm 23 extends from the drive unit 24) is varied. The driving pulley 44 is driven by means of the electric motor 41b via a gear transmission 42b.

The electric motors 41a, 41b are controlled by the electronic control unit 29. This allows precisely combining the variation of the arm length 25 and the rotation of the arm 23 about its rotation axis 30 for moving the shuttle unit(s) 22 at the free end of the arm 23 along the curved dentition of the user. Moreover, also the oscillatory movement of the shuttle unit(s) 22 parallel to the length axis of the arm 23 can be precisely actuated, basically by controlling the electric motor 41b.

A driven rotation of the shuttle unit(s) 22 about its rotation axis 27 can be provided in a known way, e.g. either by a small actuator mounted at the free end of the arm 23 or by a drive shaft feed through one of the channels of the arm 23.

On the other hand, it is also possible not to drive the rotation of the shuttle unit(s) 22, but just to have the shuttle unit(s) 22 mounted at the arm 23 in a rotatable way, such that the rotation is caused by the user's teeth 9 pushing against the shuttle unit(s) 22 when the latter is(are) moved along the dentition. Optionally, a spring mechanism (not shown) can be provided, which pushes the shuttle unit(s) 22 into a defined orientation about the rotation axis 27. Said defined orientation can be suited for cleaning the incisors, for example, and allows for a reliable and reproducible start configuration when the shuttle unit(s) 22 is(are) inserted into the user's oral cavity for initiating the cleaning process. In this case the teeth 9 push the shuttle unit(s) 22 out of said defined orientation in the course of the movement of the shuttle unit(s) 22 along the dentition, and the shuttle unit(s) 22 return(s) into the defined orientation after the cleaning process.

### List of reference signs

- 1: Device
- 2: Processing volume
- 3: Cleaning chamber element
- 4: Gum
- 5: Gumline
- 6: Contact section
- 7: Sealing lips of the contact section
- 8: Tooth surface region
- 9: Tooth
- 10: Dentifrice fluid
- 11: Pump element
- 12: Microbubble
- 13: Microbubble unit
- 14: Transducer
- 15: Gingival area
- 16: Opening in the cleaning chamber element
- 17: Outlet opening
- 18: Further transducer
- 19: Chewing surface
- 20: Abrasive cleaning element
- 21: Tooth transition area
- 22: Shuttle unit
- 23: Arm
- 24: Drive unit
- 25: Arm length
- 26: Pivot axis
- 27: Rotation axis of the shuttle unit
- 28: Spring element
- 29: Electronic control unit
- 30: Rotation axis of the arm
- 31: Palatal constraint element
- 32: Collapsing microbubble
- 33: Tank
- 34: Mask
- 35: Connection element
- 36: Chin support
- 37: Interdental area
- 38: Transducer pad
- 39: Pivotal connection between spring element and transducer pad
- 40: Force sensor
- 41 41a, 41b: Electric motor
- 42 42a, 42b: Gear transmission
- 43: Guiding pulley
- 44: Driving pulley
- 45: Handhold
- 46: Support bar
- 47: Channel
- 48: Tongue constraint element
- 49: Drive unit housing
- 50: Disc
- 51: Further tooth area p1 First pulse
- p2: Second pulse
- a1: Amplitude of the first pulse a2 Amplitude of the second pulse t1 First duration (of the first pulse) t2 Second duration (of the second pulse)

## Claims

1. A device (1) for cleaning at least in sections teeth and/or interdental areas and/or gingival areas of a user, the device (1) comprising at least one cleaning chamber element (3) configured to confining at least one processing volume (2) together with the gum (4) of the user and/or with at least one tooth surface region (8), each tooth surface region (8) belonging to a tooth (9) of the user and being adjacent to the gumline (5), and/or with at least one chewing surface (19) belonging to the at least one tooth (9) and/or with at least one tooth transition area (21) adjacent to the at least one chewing surface (19), wherein the cleaning chamber element (3) is designed such that tooth surface regions (8) and/or chewing surfaces (19) and/or tooth transition areas (21) and/or interdental areas (37) and/or gingival areas (15) of several, preferably all, upper and/or lower teeth (9) of the user can be attended by iteratively moving the cleaning chamber element (3) to adjacent positions, the device (1) further comprising at least one transducer (14) for generating ultrasound, wherein the at least one transducer (14) is configured to apply the ultrasound to a dentifrice fluid (10) in the at least one processing volume (2) such that ultrasound waves are directed toward the at least one tooth surface region (8) and/or the at least one chewing surface (19) and/or the at least one tooth transition area (21) and/or at least one interdental area (37) and/or at least one gingival area (15) for producing a cleansing action of microbubbles (12) in the dentifrice fluid (10) on the at least one tooth surface region (8) and/or the at least one chewing surface (19) and/or the at least one tooth transition area (21) and/or the at least one interdental area (37) and/or the at least one gingival area (15), wherein the at least one cleaning chamber element (3) is designed for contacting the gum (4) of the user and/or the at least one tooth surface region (8) and/or the at least one chewing surface (19) and/or the at least one tooth transition area (21) with at least one contact section (6), wherein the contact section (6) is configured to substantially seal the at least one processing volume (2) at least in the region of the gum (4) and/or the at least one tooth surface region (8) and/or the at least one chewing surface (19) and/or the at least one tooth transition area (21) such that the following is facilitated:
- filling of the processing volume (2) with the dentifrice fluid (10) and/or
- maintaining the processing volume (2) with the dentifrice fluid (10) with the microbubbles (12) having a certain size and/or a certain size distribution and/or a concentration in a certain range.

2. The device (1) according to claim 1, **characterised in that** the device (1) further comprises at least one pump element (11) for pumping and/or drawing the dentifrice fluid (10) into the at least one processing volume (2).

3. The device (1) according to any one of claims 1 to 2, **characterised in that,** the device (1) further comprises a microbubble unit (13) for generating the microbubbles (12) in the dentifrice fluid (10) with a certain initial size and/or a certain initial size distribution and/or an initial concentration in a certain range before the dentifrice fluid (10) enters the at least one processing volume (2), in order to provide for a certain size and/or a certain size distribution and/or a concentration in a certain range of the microbubbles (12) in the dentifrice fluid (10) in the processing volume (2).

4. The device (1) according to any one of claims 1 to 3, **characterised in that** at least one outlet opening (17) for the dentifrice fluid (10) is disposed in the at least one cleaning chamber element (3).

5. The device (1) according to claim 4, **characterised in that** the at least one outlet opening (17) is designed such that the dentifrice fluid (10) leaves the at least one outlet opening (17) with a direction having at least a component toward the at least one transducer (14).

6. The device (1) according to any one of claims 1 to 5, **characterised in that** at least one further transducer (18) is provided for generating ultrasound, wherein the at least one further transducer (18) is configured to apply the ultrasound to the dentifrice fluid (10) in the at least one processing volume (2) such that ultrasound waves are directed toward the at least one chewing surface (19) for producing a cleansing action of the microbubbles (12) on the at least one chewing surface (19).

7. The device (1) according to any one of claims 1 to 6, **characterised in that** abrasive cleaning elements (20) are provided for abrasively cleaning the at least one chewing surface (19), and preferably for further abrasively cleaning the at least one tooth transition area (21).

8. The device (1) according to claim 7, **characterised in that** at least one vibration generator is provided for generating vibrations in the frequency range of 50 Hz to 700 Hz, preferably in the range of 100 Hz to 500 Hz, more preferably in the range of 250 Hz to 350 Hz, in order to facilitate cleaning with the abrasive cleaning elements (20).

9. The device (1) according to any one of claims 1 to 8, **characterised in that** at least two transducers (14) are provided that are arranged opposite each other such that the at least one tooth (9) can be arranged between them, preferably wherein the at least two transducers (14) are provided for at least two processing volumes (2) that are arranged opposite each other.

10. The device (1) according to claim 9, **characterised in that** the device (1) comprises at least one shuttle unit (22) with the at least two transducers (14), wherein a drive unit (24) is provided for moving the at least one shuttle unit (22), in order to iteratively move the at least one cleaning chamber element (3) of the at least one shuttle unit (22) to adjacent positions such that tooth surface regions (8) and/or chewing surfaces (19) and/or tooth transition areas (21) and/or interdental areas (37) and/or gingival areas (15) of several, preferably all, upper and/or lower teeth (9) of the user can be attended.

11. The device (1) according to claim 10, **characterised in that** the at least one shuttle unit (22) is mounted on at least one moveable arm (23), preferably in a rotatable way, wherein the drive unit (24) is provided for moving the at least one arm (23) and the at least one shuttle unit (22), in order to iteratively move the at least one cleaning chamber element (3) of the at least one shuttle unit (22) to adjacent positions such that tooth surface regions (8) and/or chewing surfaces (19) and/or tooth transition areas (21) and/or interdental areas and/or gingival areas (15) of several, preferably all, upper and/or lower teeth (9) of the user can be attended.

12. The device (1) according to claim 11, **characterised in that** the device (1) comprises at least two shuttle units (22), each with the at least two transducers (14) arranged opposite each other, wherein the at least two shuttle units (22) are mounted, preferably symmetrically, on the at least one moveable arm (23), preferably in a rotatable way, wherein the drive unit (24) is provided for moving the at least one arm (23) and the at least two shuttle units (22), in order to iteratively move the cleaning chamber elements (3) of the at least two shuttle units (22) to adjacent positions such that tooth surface regions (8) and/or chewing surfaces (19) and/or tooth transition areas (21) and/or interdental areas (37) and/or gingival areas (15) of several, preferably all, upper and lower teeth (9) of the user can be attended.

13. The device (1) according to any one of claims 10 to 12, **characterised in that** the drive unit (24) is configured to generate the iterative movement in a continuous or an intermittent way.

14. The device (1) according to any one of claims 11 to 13 and to claim 11, **characterised in that** the length (25) of the at least one arm (23) can be varied.

15. The device (1) according to any one of claims 10 to 14, **characterised in that** the at least two transducers (14) are arranged on the at least one shuttle unit (22) in a pivotable way.

16. The device (1) according to claim 15 and to claim 11, **characterised in that** the at least two transducers (14) are pivotable about pivot axes (26), wherein the pivot axes (26) run transverse, preferably normal, to a rotational axis (27), about which rotational axis (27) the at least one shuttle (22) can be rotated on the at least one arm (23).

17. The device (1) according to any one of claims 15 to 16, **characterised in that** at least one spring element (28) is provided for pivoting the at least two transducers (14) into certain orientations.

18. The device (1) according to any one of claims 1 to 17 and to claim 3, **characterised in that** the microbubble unit (13) is configured for generating the microbubbles (12) in the dentifrice fluid (10) with the initial concentration and/or the concentration in the range of 0.01 vol.% to 15 vol.%, preferably in the range of 0.5 vol.% to 10 vol.%, more preferably in the range of 0.2 vol.% to 5 vol.%.

19. The device (1) according to any one of claims 1 to 18, **characterised in that** the ultrasound is appropriate to resonate and/or to collapse and/or to move the microbubbles (12) in the dentifrice fluid (10) having a diameter in the range of 1 µm to 500 µm, preferably in the range of 1 µm to 50 µm, more preferably in the range of 5 µm to 40 µm.

20. The device (1) according to any one of claims 11 to and to claim 11 and to claim 7, **characterised in that** an electronic control unit (29) controls the drive unit (24), wherein the electronic control unit (29) is configured to move the at least one shuttle unit (22) in an oscillatory way with a directional component along the at least one arm (23).

21. The device (1) according to claim 20, **characterised in that** the frequency of the oscillatory movement is in the range of 50 Hz to 700 Hz, preferably in the range of 100 Hz to 500 Hz, more preferably in the range of 250 Hz to 350 Hz.

22. The device (1) according to any one of claims 1 to 21, **characterised in that** at least one volume flow sensor is provided for detecting the volume flow of the dentifrice fluid (10), wherein the volume flow sensor is connected to an electronic control unit (29).

23. The device (1) according to any one of claims 1 to 22, **characterised in that** an electronic control unit (29) controls the at least one transducer (14) and is configured to carry out the following step: applying the ultrasound to the dentifrice fluid (10) in the at least one processing volume (2) such that the ultrasound application comprises a first sequence of pulses comprising at least one first pulse (p1) with at least one first mean intensity and at least one second pulse (p2), which is applied after the first pulse (p1) and which has at least one second mean intensity, wherein the first mean intensity is configured to move the microbubbles (12) in the dentifrice fluid (10) toward the at least one tooth surface region (8) and/or the at least one chewing surface (19) and/or the at least one tooth transition area (21) and/or at least one interdental area (37) and/or at least one gingival area (15), wherein the second mean intensity is greater than the first mean intensity and is configured to generate microbubble-induced shear stresses, in order to produce a cleansing action of the microbubbles (12) on the at least one tooth surface region (8) and/or the at least one chewing surface (19) and/or the at least one tooth transition area (21) and/or the at least one interdental area (37) and/or at least one gingival area (15).

24. The device (1) according to claim 23, **characterised in that** the electronic control unit (29) is configured to carry out the following step: applying at least one second sequence of pulses to the dentifrice fluid (10) in the at least one processing volume (2) after the first sequence of pulses, wherein the at least one second sequence of pulses comprises the at least one first pulse (p1) and the at least one second pulse (p2) after the first pulse (p1).

## Amended claims

### Amended claims in accordance with Rule 137(2) EPC.

**1.** A device (1) for cleaning at least in sections teeth and/or interdental areas and/or gingival areas of a user, the device (1) comprising at least one cleaning chamber element (3) configured to confining at least one processing volume (2) together with the gum (4) of the user and/or with at least one tooth surface region (8), each tooth surface region (8) belonging to a tooth (9) of the user and being adjacent to the gumline (5), and/or with at least one chewing surface (19) belonging to the at least one tooth (9) and/or with at least one tooth transition area (21) adjacent to the at least one chewing surface (19), **characterized in that** the cleaning chamber element (3) is designed such that tooth surface regions (8) and/or chewing surfaces (19) and/or tooth transition areas (21) and/or interdental areas (37) and/or gingival areas (15) of several, preferably all, upper and/or lower teeth (9) of the user can be attended by iteratively moving the cleaning chamber element (3) to adjacent positions, the device (1) further comprising at least one transducer (14) for generating ultrasound, wherein the at least one transducer (14) is configured to apply the ultrasound to a dentifrice fluid (10) in the at least one processing volume (2) such that ultrasound waves are directed toward the at least one tooth surface region (8) and/or the at least one chewing surface (19) and/or the at least one tooth transition area (21) and/or at least one interdental area (37) and/or at least one gingival area (15) for producing a cleansing action of microbubbles (12) in the dentifrice fluid (10) on the at least one tooth surface region (8) and/or the at least one chewing surface (19) and/or the at least one tooth transition area (21) and/or the at least one interdental area (37) and/or the at least one gingival area (15), wherein the at least one cleaning chamber element (3) is designed for contacting the gum (4) of the user and/or the at least one tooth surface region (8) and/or the at least one chewing surface (19) and/or the at least one tooth transition area (21) with at least one contact section (6), wherein the contact section (6) is configured to substantially seal the at least one processing volume (2) at least in the region of the gum (4) and/or the at least one tooth surface region (8) and/or the at least one chewing surface (19) and/or the at least one tooth transition area (21) such that the following is facilitated:
- filling of the processing volume (2) with the dentifrice fluid (10) and/or
- maintaining the processing volume (2) with the dentifrice fluid (10) with the microbubbles (12) having a certain size and/or a certain size distribution and/or a concentration in a certain range.

**2.** The device (1) according to claim 1, **characterised in that** the device (1) further comprises at least one pump element (11) for pumping and/or drawing the dentifrice fluid (10) into the at least one processing volume (2).

**3.** The device (1) according to any one of claims 1 to 2, **characterised in that,** the device (1) further comprises a microbubble unit (13) for generating the microbubbles (12) in the dentifrice fluid (10) with a certain initial size and/or a certain initial size distribution and/or an initial concentration in a certain range before the dentifrice fluid (10) enters the at least one processing volume (2), in order to provide for a certain size and/or a certain size distribution and/or a concentration in a certain range of the microbubbles (12) in the dentifrice fluid (10) in the processing volume (2).

**4.** The device (1) according to any one of claims 1 to 3, **characterised in that** at least one outlet opening (17) for the dentifrice fluid (10) is disposed in the at least one cleaning chamber element (3).

**5.** The device (1) according to claim 4, **characterised in that** the at least one outlet opening (17) is designed such that the dentifrice fluid (10) leaves the at least one outlet opening (17) with a direction having at least a component toward the at least one transducer (14).

**6.** The device (1) according to any one of claims 1 to 5, **characterised in that** at least one further transducer (18) is provided for generating ultrasound, wherein the at least one further transducer (18) is configured to apply the ultrasound to the dentifrice fluid (10) in the at least one processing volume (2) such that ultrasound waves are directed toward the at least one chewing surface (19) for producing a cleansing action of the microbubbles (12) on the at least one chewing surface (19).

**7.** The device (1) according to any one of claims 1 to 6, **characterised in that** abrasive cleaning elements (20) are provided for abrasively cleaning the at least one chewing surface (19), and preferably for further abrasively cleaning the at least one tooth transition area (21).

**8.** The device (1) according to claim 7, **characterised in that** at least one vibration generator is provided for generating vibrations in the frequency range of 50 Hz to 700 Hz, preferably in the range of 100 Hz to 500 Hz, more preferably in the range of 250 Hz to 350 Hz, in order to facilitate cleaning with the abrasive cleaning elements (20).

**9.** The device (1) according to any one of claims 1 to 8, **characterised in that** at least two transducers (14) are provided that are arranged opposite each other such that the at least one tooth (9) can be arranged between them, preferably wherein the at least two transducers (14) are provided for at least two processing volumes (2) that are arranged opposite each other.

**10.** The device (1) according to claim 9, **characterised in that** the device (1) comprises at least one shuttle unit (22) with the at least two transducers (14), wherein a drive unit (24) is provided for moving the at least one shuttle unit (22), in order to iteratively move the at least one cleaning chamber element (3) of the at least one shuttle unit (22) to adjacent positions such that tooth surface regions (8) and/or chewing surfaces (19) and/or tooth transition areas (21) and/or interdental areas (37) and/or gingival areas (15) of several, preferably all, upper and/or lower teeth (9) of the user can be attended.

**11.** The device (1) according to claim 10, **characterised in that** the at least one shuttle unit (22) is mounted on at least one moveable arm (23), preferably in a rotatable way, wherein the drive unit (24) is provided for moving the at least one arm (23) and the at least one shuttle unit (22), in order to iteratively move the at least one cleaning chamber element (3) of the at least one shuttle unit (22) to adjacent positions such that tooth surface regions (8) and/or chewing surfaces (19) and/or tooth transition areas (21) and/or interdental areas and/or gingival areas (15) of several, preferably all, upper and/or lower teeth (9) of the user can be attended.

**12.** The device (1) according to claim 11, **characterised in that** the device (1) comprises at least two shuttle units (22), each with the at least two transducers (14) arranged opposite each other, wherein the at least two shuttle units (22) are mounted, preferably symmetrically, on the at least one moveable arm (23), preferably in a rotatable way, wherein the drive unit (24) is provided for moving the at least one arm (23) and the at least two shuttle units (22), in order to iteratively move the cleaning chamber elements (3) of the at least two shuttle units (22) to adjacent positions such that tooth surface regions (8) and/or chewing surfaces (19) and/or tooth transition areas (21) and/or interdental areas (37) and/or gingival areas (15) of several, preferably all, upper and lower teeth (9) of the user can be attended.

**13.** The device (1) according to any one of claims 10 to 12, **characterised in that** the drive unit (24) is configured to generate the iterative movement in a continuous or an intermittent way.

**14.** The device (1) according to any one of claims 11 to 13 and to claim 11, **characterised in that** the length (25) of the at least one arm (23) can be varied.

**15.** The device (1) according to any one of claims 10 to 14, **characterised in that** the at least two transducers (14) are arranged on the at least one shuttle unit (22) in a pivotable way.

**16.** The device (1) according to claim 15 and to claim 11, **characterised in that** the at least two transducers (14) are pivotable about pivot axes (26), wherein the pivot axes (26) run transverse, preferably normal, to a rotational axis (27), about which rotational axis (27) the at least one shuttle (22) can be rotated on the at least one arm (23).

**17.** The device (1) according to any one of claims 15 to 16, **characterised in that** at least one spring element (28) is provided for pivoting the at least two transducers (14) into certain orientations.

**18.** The device (1) according to any one of claims 1 to 17, **characterised in that** the microbubble unit (13) is configured for generating the microbubbles (12) in the dentifrice fluid (10) with the initial concentration and/or the concentration in the range of 0.01 vol.% to 15 vol.%, preferably in the range of 0.5 vol.% to 10 vol.%, more preferably in the range of 0.2 vol.% to 5 vol.%.

**19.** The device (1) according to any one of claims 1 to 18, **characterised in that** the device (1) is configured to generate the ultrasound by means of at least one transducer, whereby the ultrasound is appropriate to resonate and/or to collapse and/or to move the microbubbles (12) in the dentifrice fluid (10) having a diameter in the range of 1 µm to 500 µm, preferably in the range of 1 µm to 50 µm, more preferably in the range of 5 µm to 40 µm.

**20.** The device (1) according to any one of claims 1 to 11, **characterised in that** an electronic control unit (29) controls the drive unit (24), wherein the electronic control unit (29) is configured to move the at least one shuttle unit (22) in an oscillatory way with a directional component along the at least one arm (23).

**21.** The device (1) according to claim 20, **characterised in that** the frequency of the oscillatory movement is in the range of 50 Hz to 700 Hz, preferably in the range of 100 Hz to 500 Hz, more preferably in the range of 250 Hz to 350 Hz.

**22.** The device (1) according to any one of claims 1 to 21, **characterised in that** at least one volume flow sensor is provided for detecting the volume flow of the dentifrice fluid (10), wherein the volume flow sensor is connected to an electronic control unit (29).

**24.** The device (1) according to claim 22, **characterised in that** the electronic control unit (29) is configured to carry out the following step: applying at least one second sequence of pulses to the dentifrice fluid (10) in the at least one processing volume (2) after the first sequence of pulses, wherein the at least one second sequence of pulses comprises the at least one first pulse (p1) and the at least one second pulse (p2) after the first pulse (p1).
